(19) Europäisches Patentamt
European Patent Office
Office européen des brevets

(11) Veröffentlichungsnummer: **0 071 898**
**B1**

# (12) EUROPÄISCHE PATENTSCHRIFT

(45) Veröffentlichungstag der Patentschrift: **15.07.87**

(51) Int. Cl.[4]: **C 08 G 18/79,** C 08 G 18/80, C 08 G 18/22

(21) Anmeldenummer: **82106877.2**

(22) Anmeldetag: **30.07.82**

(54) **Langzeit-lagerbeständige, heterogene Einkomponentensysteme aus Polyol-/Diphenylmethan-uretdion-diisocyanaten, Verfahren zu ihrer Herstellung und ihre Verwendung zur Synthese hochmolekularer Polyurethane.**

(30) Priorität: **12.08.81 DE 3131780**

(43) Veröffentlichungstag der Anmeldung: **16.02.83 Patentblatt 83/7**

(45) Bekanntmachung des Hinweises auf die Patenterteilung: **15.07.87 Patentblatt 87/29**

(84) Benannte Vertragsstaaten: **AT BE CH DE FR GB IT LI NL SE**

(56) Entgegenhaltungen:
**FR - A - 1 471 610**
**FR - A - 2 268 838**
**FR - A - 2 268 840**
**GB - A - 1 207 673**

(73) Patentinhaber: **BAYER AG, Konzernverwaltung RP Patentabteilung, D-5090 Leverkusen 1 Bayerwerk (DE)**

(72) Erfinder: **Grögler, Gerhard, Dr., von-Diergardt-Strasse 46, D-5090 Leverkusen (DE)**
Erfinder: **Kallert, Wilhelm, Dr., An den Ruthen 1, D-5000 Köln 80 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).



ACTORUM AG

**Beschreibung**

Die Erfindung betrifft neue, langzeitlagerbeständige, niedermolekulare, fliessfähige, pastenartige oder leicht aufschmelzbare, heterogene, durch Hitzeeinwirkung zu Polyurethanen härtbare Einkomponentensysteme auf Basis von Polyhydroxylverbindungen und 4,4'-Diphenylmethanuretdiondiisocyanaten in dimerer und/oder oligomerer Form unter Verwendung von Blei- und/oder Zinnkatalysatoren, ein Verfahren zu ihrer Herstellung und ihre Verwendung zur Synthese von Polyurethankunststoffen durch Hitzehärtung.

Die Verwendung von Uretdiongruppen-haltigen Isocyanaten zur Herstellung von Polyurethankunststoffen ist an sich bekannt. So kann man gemäss DE-PS 1 014 740 zunächst ein NCO-Voraddukt aus einem Polyester mit Hydroxylendgruppen und einem Überschuss an Uretdiondiisocyanat, z.B. dem dimeren Toluylendiisocyanat, herstellen und in dieses dann Di- oder Triole, Wasser, aromatische Diamine, Hydroxypolyester oder -ether einmischen und bei erhöhter Temperatur vernetzen.

Es ist auch bekannt, zunächst ein lagerstabiles Polyurethan aus höhermolekularer Polyhydroxylverbindung, Glykol und unterschüssigen Mengen Diisocyanat herzustellen und später in diese OH-Gruppen aufweisenden Polyurethane nach üblichen Kautschuk-Techniken ein Uretdion-diisocyanat einzumischen. Diese Mischung ist relativ lagerstabil und liefert erst nach Ausheizen auf 100 bis 180 °C unter Reaktion der Uretdiongruppe mit OH- und/oder Urethangruppen das endgültig vernetzte, hochelastische Material (DE-PS 968 566).

Gemäss DE-PS 952 940 kann man in ähnlicher Verfahrensweise in ein Polyurethan mit endständigen aromatischen Aminogruppen (hergestellt aus höhermolekularer Polyhydroxylverbindung, aromatischen Diaminen und unterschüssigen Mengen an aromatischen Diisocyanaten) ein Uretdiondiisocyanat auf der Kautschukwalze in solchen Mengen einmischen, dass einerseits die freien NCO-Gruppen im Unterschuss – bezogen auf die Aminoendgruppen – zur Anwendung kommen, dass andererseits bei der Öffnung des Uretdionringes in der Hitze aber ein Gesamtüberschuss an Isocyanat resultiert. Durch diesen Isocyanatüberschuss tritt bei Temperaturen oberhalb von 100 °C unter Spaltung des Uretdionringes Vernetzung ein.

Ferner ist es bekannt, höhermolekulare Polyhydroxylverbindungen wie Polyester oder Polyether, gegebenenfalls difunktionelle Kettenverlängerungsmittel (wie Glykole), mit Uretdiondiisocyanaten (dimerem 2,4-Diisocyanatotoluol) oder Mischungen von Uretdiondiisocyanaten und weiteren Diisocyanaten (wie 4,4'-Diisocyanatodiphenylmethan) bei Temperaturen kleiner 100 °C in der Schmelze in solchen Mengenverhältnissen umzusetzen, dass praktisch alle freien NCO-Gruppen der Diisocyanate von den reaktionsfähigen Wasserstoffatomen der übrigen Reaktionspartner verbraucht werden. Die lagerstabile, hochmolekulare, im wesentlichen unvernetzte Polyurethanmasse kann dann durch längeres Erhitzen auf Temperaturen oberhalb 100 °C unter Reaktion der Uretdiongruppe mit z.B. Urethangruppierungen in vernetzte Polyurethane überführt werden (DE-PS 1 153 900).

Desgleichen ist es aus der DE-A 2 502 934 bekannt, ein Uretdiongruppen enthaltendes Polyisocyanat mit unterschüssigen Mengen (bezogen auf freie NCO-Gruppen) eines Kettenverlängerungsmittels des Molekulargewichts 18 bis 300 mit 2 bis 3 NCO-reaktiven Gruppen und durch Reaktion mit einem im Sinn der Polyadditionsreaktion monofunktionellen Blockierungsmittels in das entsprechende Uretdiongruppen und blockierte Isocyanatgruppen, sowie in der Kette Urethan- und/oder reaktive H-Atome aufweisende Verbindungen zu überführen. Diese Verbindungen dienen als Reaktionspartner für Polyhydroxylverbindungen bei der Herstellung von Polyurethankunststoffen nach dem Isocyanat-Polyadditionsverfahren.

Weiterhin wurden Uretdion-haltige Additionsverbindungen, hergestellt aus Uretdiondiisocyanaten und NCO-reaktiven Verbindungen, in der DE-A 2 420 475, GB-PS 783 564, FR-PS 1 430 508, BE-PS 659 576, DE-A 2 221 170 und FR-PS 1 471 610 erwähnt.

Gemeinsames Kennzeichen dieser zitierten Patentliteratur ist es, dass die Härtung der Verfahrensprodukte durch Vernetzungsreaktion der aktive H-Atome enthaltenden Verbindungen mit dem eingebauten Uretdionring unter Spaltung des letzteren erfolgt. Dabei wurden Temperaturen von über 100 °C, zumeist oberhalb 140 °C, teilweise bis 250 °C, genannt, wobei zur vollständigen Härtung und zur Erreichung der Endeigenschaften teilweise sehr lange thermische Verarbeitungszeiten bei den hohen Temperaturen erforderlich sind.

Die in obigen Veröffentlichungen erwähnten Uretdiongruppen enthaltenden Verfahrensprodukte basieren gemäss zitierter Beispiele im allgemeinen auf dimeren Diisocyanatotoluolen und stellen bereits in nicht ausgehärtetem Zustand hochmolekulare, thermoplastische Vorprodukte mit eingebauten Reaktionsgruppen dar (Uretdionring/H-aktive Verbindung).

Erst oberhalb einer gewissen, relativ hohen Temperatur (z.B. oberhalb 140 °C) tritt unter Erweichung bzw. Schmelze der höhermolekularen Urethanvorprodukte Reaktion zu den hochmolekularen oder vernetzten Endprodukten ein, da bei diesen Temperaturen der Uretdionring hinreichend in Reaktion tritt und sich die in der Polyurethanmatrix zunächst fixierten Reaktionspartner durch Diffusionsvorgänge treffen und sich damit polyaddieren können.

Werden dagegen die in den obigen Patenten angegebenen Ausgangskomponenten wie dimeres Diisocyanatotoluol, Polyester, Polyether mit oder ohne niedermolekulare Kettenverlängerer, ohne Vormodifizierung vermischt (Kennzahl kleiner = 100, bezogen auf freie NCO-Gruppen), so tritt alsbaldige Viskositätserhöhung zu bereits relativ hochmolekularen, bereits elastomeren Vorstufen ein und man erhält – insbesondere in Gegenwart von Katalysatoren – hochmolekulare Produkte, die sich – wenn überhaupt – nur durch aufwendige Verarbeitungstechniken (Kautschuktechnik) unter Vernetzung ihrer Uretdiongruppen zum vernetzten Polyurethan verarbeiten lassen. Bedingt durch die relative Schwerlöslichkeit und den relativ hohen Schmelzpunkt (etwa 150 °C) lassen sich mit dimeren Diisocyanatotoluolen in Kombination mit Polyethern und/oder Polyestern, sowie gegebenenfalls mit niedermolekularen Kettenverlängerern bei einer Kennzahl von etwa 100, bezogen auf freie NCO-Gruppen, zwar Reaktionsmischungen mit bei Raumtemperatur mässiger oder auch relativ langer Verarbeitungszeit (Topfzeit) herstellen. Diese Mischungen sind jedoch unter den andererseits zur Vernetzung erforderlichen Bedingungen, d.h. nach Zusatz der erforderlichen Katalysatoren, bei Raumtemperatur dann nicht mehr lagerstabil. Es handelt sich hierbei also um nicht hinreichend lagerstabile Einkomponentensysteme (s. Vergleichsbeispiele).

In der DE-A 2 941 051 wird ein Verfahren zur Herstellung von faserverstärkten Formkörpern angegeben, wo eine max. 2 bis 4 Tage verarbeitbare Polyurethanmasse aus einem hochschmelzenden Polyisocyanat (z.B. dimerem 2,4-Toluylendiisocyanat) und einer reaktive Wasserstoffatome aufweisenden Masse mit einer Funktionalität zwischen 2,5 und 3,5, hergestellt aus Polyisocyanaten, 2 bis 8 OH-Gruppen aufweisenden Verbindungen vom Molekulargewicht 300 bis 10 000, einem 2 bis 4 OH-Gruppen aufweisenden Kettenverlängerungsmittel, gegebenenfalls einer 2 bis 4 Aminogruppen aufweisenden Verbindung, bzw. Wasser, Katalysatoren und in Gegenwart eines Molekularsiebes in bestimmten Molverhältnissen der Komponenten umgesetzt wird.

Es handelt sich hier jedoch nur um wenige Stunden bis max. nur wenige Tage lagerstabile Reaktivkomponenten und hier sind nur speziell modifizierte OH-Gruppen-haltige Polyurethanmassen als Reaktionspartner der hochschmelzenden Diisocyanate geeignet.

In der DE-A 2 921 162 werden hitzehärtbare, faserhaltige Formmassen beschrieben, wo ein spezielles OH-Gruppen aufweisendes Vorpolymeres mit 0,5 bis 7 Gew.-% an freien OH-Gruppen, 5 bis 20 Gew.-% Urethangruppen, gegebenenfalls bis 2,5 Gew.-% Harnstoffgruppen, 0,1 bis 5 Gew.-% Aktivatoren und gegebenenfalls 1 bis 5 Gew.-% eines Molekularsiebes, mit hochschmelzenden Polyisocyanaten (Schmelzpunkt grösser 100 °C) oberhalb von 90 °C unter Druck von 20 bis 400 bar ausgehärtet werden. Als hochschmelzende Diisocyanate werden das dimere Toluylendiisocyanat verwendet und das dimere Diphenylmethandiisocyanat als gleichfalls bevorzugt bezeichnet. Die Formmassen weisen eine Lagerstabilität von mindestens 10 Tagen auf. Die Herstellung des geeigneten, urethangruppenhaltigen OH-Vorpolymers ist jedoch aus einer Vielzahl von Komponenten in nur ausgewählten Mengen und Funktionalitäten möglich, um zu den mässig lagerstabilen Produkten zu kommen.

Auch in der DE-A 2 842 805 werden lösungsmittelfreie Einkomponentenmassen beschrieben, wo man ein hochschmelzendes Diisocyanat, vorzugsweise Toluylendiisocyanatdimer, mit Urethangruppen vorverlängerten Hydroxylprepolymeren mit dispergierten Urethanhartsegmenten und zusätzlich bestimmten Mengen an Diaminen verwendet. Es müssen als Startkomponenten verzweigte Polyether mit der Funktionalität 2,5 bis 3 eingesetzt werden. Macht man die Polyadditionsreaktion ohne Vorverlängerung des höhermolekularen Polyols, so ist die Mischung mit dimerem Toluylendiisocyanat nicht lagerstabil bei der Verwendung von Katalysatoren.

In der DE-A 2 044 838 wird ein Verfahren zur Herstellung hochmolekularer, NCO-Gruppen freier, uretdiongruppenhaltiger, im wesentlichen linearer Polyurethane beschrieben, indem man die Komponenten wie z.B. höhermolekulares Polyol, gegebenenfalls bestimmte Kettenverlängerer und Uretdiondiisocyanate (z.B. dimeres Toluylendiisocyanat oder dimeres Diphenylmethandiisocyanat) in hochpolaren Lösungsmitteln wie Dimethylformamid bei Raumtemperatur oder wenig erhöhten Temperaturen katalysatorfrei umsetzt. Im hochpolaren Lösungsmittel sind die NCO-Gruppen des dimeren Diisocyanats nicht lagerstabil, sondern setzen sich mit den OH-Gruppen der Polyole zum linearen Polyurethan um. Das uretdiongruppenhaltige Polyurethan wird in einem weiteren Schritt (z.B. Verspinnung) mittels aliphatischer Polyamine bei Raumtemperatur zu einem hochvernetzten Produkt (z.B. Fäden) umgewandelt. In der britischen Patentschrift 1 134 285 ist das dimere 4,4′-Diisocyanato-diphenylmethan als Bestandteil eines Einkomponentensystems beschrieben. Im Gegensatz zu der vorliegenden Erfindung wurden jedoch wässrige Dispersionen von dimerem 4,4′-Diisocyanato-diphenylmethan in Kombination mit H-aciden Verbindungen beansprucht. Diese Dispersionen wurden bei 200 °C gehärtet und dienen insbesondere als Beschichtungsmaterialien (zur Herstellung von dünnen Filmen). Hierbei handelt es sich jedoch nicht um definierte, MDI-Uretdione, sondern um höhermolekulare, mit Harnstoffgruppen modifizierte, NCO-haltige Uretdionisocyanate (vgl. Beispiel 37), die infolge ihrer extremen Schwerlöslichkeit erst oberhalb von 200 °C zur Reaktion gebracht werden können. Der Uretdionring wird erst unter diesen Bedingungen gespalten.

Demgegenüber hat die Erfindung langzeitlagerbeständige, niedermolekulare, im wesentlichen wasserfreie, fliessfähige, pastenartige oder leicht aufschmelzbare, heterogene, durch Hitzeeinwirkung zu Polyurethanen härtbare Einkomponentensysteme auf Basis von 4,4′-Diisocyanatodiphenylmethan-uretdionen der Formel mit einem mittleren Wert von n = 0 bis 2,5, besonders bevorzugt

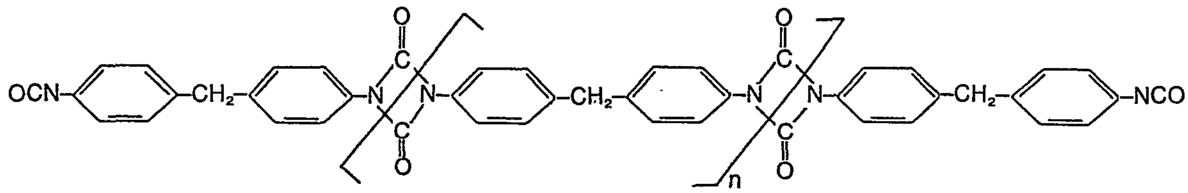

n = 0,1 bis 1,5 zum Gegenstand. In diesem Einkomponentensystem liegen überraschenderweise das freie NCO-Gruppen tragende Uretdion und die H-aktiven Verbindungen als stabiles Zwei- oder (Mehr)phasen-System nebeneinander vor. Diese giessbaren, rakelbaren oder bei niedrigen Temperaturen thermoplastisch verarbeitbaren, heterogenen Einkomponenten-Reaktivsysteme lassen sich in Gegenwart von bestimmten Katalysatoren und bei relativ niedrigen Reaktionstemperaturen von etwa 100 °C bis 140 °C zu hochmolekularen Polyurethanen aushärten, wobei eine Öffnung des Uretdionrings überraschenderweise nicht oder nur in untergeordnetem Masse eintritt. Die Diphenylmethan-Uretdionstruktur übernimmt hier überwiegend die Wirkung von «Hartsegmenten», welche besonders bei den «oligomeren» Diphenylmethan-uretdionen der oben angegebenen Formel, wobei n = 0,1 bis 2,5, besonders bevorzugt 0,1 bis 1,5 ist, als solche wirksam wird.

Es wurde überraschend gefunden, dass die extrem schwer löslichen und hochschmelzenden Diphenylmethan-uretdione der o.g. Formel (n = 0 bis 2,5, besonders bevorzugt 0,1 bis 1,5) in Gegenwart bestimmter Katalysatoren mit höhermolekularen und/oder niedermolekularen Verbindungen in einem Temperaturbereich von etwa 100 bis 140 °C, vorzugsweise 100 bis 120 °C, zur Umsetzung gebracht werden können, wobei je nach Wahl der H-aciden Verbindung hochwertige Polyurethankunststoffe hergestellt werden können.

Es wurde weiterhin überraschend gefunden, dass diese Reaktionsmischungen aus den genannten Diphenylmethan-uretdiondiisocyanaten und H-aciden Verbindungen, welche gegebenenfalls auch feinverteilte Polyaddukte auf Polyisocyanatbasis enthalten können, selbst in Gegenwart der wirksamen, die Polyurethanbildung katalysierenden Katalysatoren, eine extreme Langzeit-Lagerstabilität bei Raumtemperatur oder nur wenig erhöhten Temperaturen von mindestens 3 Monaten aufweisen.

Diese Befunde sind überraschend und waren der veröffentlichten Literatur nicht zu entnehmen. Die Diphenylmethan-uretdiondiisocyanate der allgemeinen Formel innerhalb der angegebenen Grenzen für n, insbesondere die oligomeren Uretdione mit n = 0,1 bis 2,5, vorzugsweise 0,1 bis 1,5, verhalten sich deutlich und unerwartet verschieden von dimerem Toluylendiisocyanat. So reagiert das dimere Toluylendiisocyanat im allgemeinen mit seinen NCO-Gruppen und den Hydroxylgruppen von Polyhydroxylverbindungen auch bei Raumtemperatur und es sind sehr spezielle Massnahmen erforderlich, wie im Stand der Technik geschildert, um einigermassen lagerstabile Systeme herzustellen. Liegen die Produkte mit dimerem Toluylendiisocyanat zusammen mit Katalysatoren vor, so reduziert sich die Lagerstabilität weiter (s. Vergleichsversuche).

Erfindungsgemäss werden die Diphenylmethan-uretdiondiisocyanate als reines Dimer des Diphenylmethandiisocyanats, bzw. vorzugsweise in bestimmten Formen der oligomeren Diphenylmethan-uretdione verwendet. Dabei ist es erfindungswesentlich, die oligomeren Anteile innerhalb der beanspruchten Grenzen auszuwählen. Höhermolekulare Oligomere sind nicht für die erfindungsgemässe Anwendung in Einkomponentenreaktivsystemen als Diisocyanatkomponenten brauchbar (s. Vergleichsversuche). Gegenstand der Erfindung sind langzeit-lagerbeständige, niedermolekulare, im wesentlichen wasserfreie, fliessfähige, pastenartige oder leicht aufschmelzbare, heterogene, durch Hitzeeinwirkung zu Polyurethanen härtbare Einkomponentensysteme auf Basis von Polyhydroxylverbindungen, hochschmelzenden Diisocyanat-Dimeren und gegebenenfalls Katalysatoren, dadurch gekennzeichnet, dass sie enthalten:

A) 1 OH-Äquivalent von zwei- oder mehrwertigen, höhermolekularen Polyhydroxylverbindungen mit einem Molekulargewicht von 1000 bis 10 000, vorzugsweise 1250 bis 6000, besonders bevorzugt 1500 bis 4500,

B) m. (1 bis 1,5) + (0,8 bis 1,5) NCO-Äquivalente von

1) von 4,4'-Diphenylmethan-uretdion-diisocyanaten

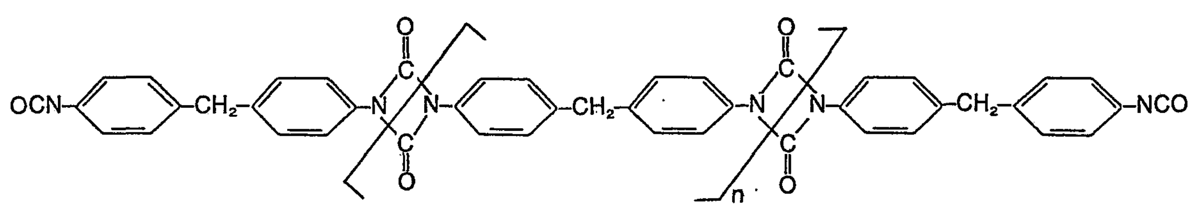

n = 0 bis 2,5, bevorzugt 0 bis 1,5, besonders bevorzugt 0,1 bis 1,5,
m = 0,

oder

2) von entweder in situ in der Suspension in A) oder vorher separat aus B)/1 und zwei- oder

mehrfunktionellen, niedermolekularen Verbindungen mit an aliphatische und/oder cycloaliphatische Gruppen gebundenen OH-Gruppen und/oder aromatischen $NH_2$-Gruppen und Molekulargewichten von 62 bis 400 hergestellten, modifizierten 4,4'-Diphenylmethanuretdiondiisocyanaten, wobei m Werte von 0 bis 7 aufweist und zur Modifizierung m OH- und/oder $NH_2$-Äquivalente dieser zwei- oder mehrfunktionellen, niedermolekularen Verbindungen mit an aliphatische und/oder cycloaliphatische Gruppen gebundenen OH-Gruppen und/oder aromatischen $NH_2$-Gruppen und Molekulargewichten von 62 bis 400 mit m·(1 bis 1,5) + (0,8 bis 1,5) NCO-Äquivalenten von B)/1 umgesetzt sind,
in feinpulverisierter Form mit einer mittleren Teilchengrösse von 1 bis 70 µm,

C) 0,001 bis 5 Gew.-%, bevorzugt 0,01 bis 2 Gew.-%, bezogen auf A) + B) eines Blei- und/oder Zinnkatalysators, gegebenenfalls zusammen mit weiteren, üblichen Polyurethankatalysatoren, gegebenenfalls

D) 0 bis 25 Gew.-%, bevorzugt 2,5 bis 12,5 Gew.-% (bezogen auf die Gesamtmischung) füllstoffartige, feinteilige Polyaddukte mit einer mittleren Teilchengrösse von 1 bis 70 µ aus Polyisocyanaten und mindestens einer, gegenüber NCO-Gruppen zwei oder mehrere reaktive Gruppen aufweisenden, relativ niedermolekularen Verbindung des Molekulargewichts 32 bis 400, vorzugsweise 62 bis 400, und gegebenenfalls

E) weiteren Hilfs- und Zusatzstoffen, wie sie in der Polyurethanchemie üblich sind.

Gegenstand der Erfindung ist auch ein Verfahren zur Herstellung von langzeitlagerbeständigen Einkomponentensystemen nach Anspruch 1 bis 4 aus Polyhydroxylverbindungen, hochschmelzenden Diisocyanat-Dimeren und gegebenenfalls Katalysatoren, dadurch gekennzeichnnet, dass man

A) 1 Äquivalent einer zwei- oder mehrwertigen, höhermolekularen Polyhydroxylverbindung mit einem Molekulargewicht zwischen 1000 und 10 000, vorzugsweise 1250 bis 6000, besonders bevorzugt 1500 bis 4500, mit

B) m.(1 bis 1,5) + (0,8 bis 1,5) NCO-Äquivalenten von

1) von 4,4'-Diphenylmethan-uretdion-diisocyanaten

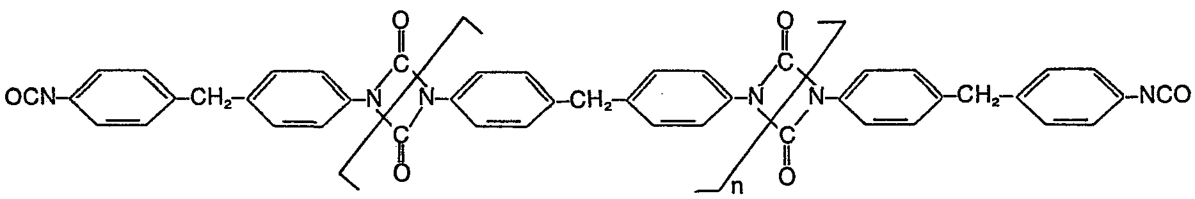

n = 0 bis 2,5, vorzugsweise 0 bis 1,5 und besonders bevorzugt 0,1 bis 1,5,
oder

2) von entweder in situ in Dispersion A) oder vorher extern aus B)/1) und einer zwei- oder mehrfunktionellen, niedermolekularen Verbindung mit an aliphatische oder cycloaliphatische Reste gebundenen OH-Gruppen und/oder aromatisch gebundenen $NH_2$-Gruppen und einem Molekulargewicht zwischen 62 und 400 hergestellten, modifizierten 4,4'-Diphenylmethan-uretdion-diisocyanaten,
wobei m Werte von grösser 0 bis 7 aufweist und zur Modifikation m OH- und/oder $NH_2$-Äquivalente dieser zwei- oder mehrfunktionellen, niedermolekularen Verbindungen mit an aliphatische und/oder cycloaliphatische Gruppen gebundenen OH-Gruppen und/oder aromatischen $NH_2$-Gruppen und Molekulargewichten von 62 bis 400, mit m·(1 bis 1,5) + (0,8 bis 1,5) NCO-Äquivalenten von B)/1 umgesetzt sind, in feinpulverisierter, eine mittlere Korngrösse von 1 bis 70 µm aufweisender Form,

C) 0,001 bis 5 Gew.-%, vorzugsweise 0,01 bis 2 Gew.-%, bezogen auf A) + B) eines Blei- und/oder Zinnkatalysators, gegebenenfalls zusammen mit weiteren, üblichen Polyurethankatalysatoren, gegebenenfalls

D) 0 bis 25 Gew.-%, bevorzugt 2,5 bis 12,5 Gew.-%, bezogen auf die Gesamtmischung eines füllstoffhaltigen, feinteiligen Polyaddukts aus Polyisocyanaten und mindestens einer, gegenüber NCO-Gruppen zwei oder mehrere reaktive Gruppen aufweisenden, relativ niedermolekularen Verbindung des Molekulargewichts 32 bis 400, vorzugsweise einer bifunktionellen Verbindung des Molekulargewichts 62 bis 400,
und gegebenenfalls

E) weiteren Hilfs- und Zusatzstoffen, wie sie in der Polyurethanchemie üblich sind, vermischt.

Ein weiterer Gegenstand der Erfindung ist die Verwendung der langzeitlagerstabilen Einkomponentensysteme zur Herstellung von hitzehärtbaren Polyurethankunststoffen unter Erhitzen der Einkomponentenmischung auf Temperaturen oberhalb von 100 °C, vorzugsweise 120–140 °C.

Als Ausgangsverbindungen für die erfindungsgemässen Einkomponentensysteme werden folgende Komponenten eingesetzt:

A)

Als zwei- oder mehrwertige, höhermolekulare Polyhydroxylverbindungen dienen Verbindungen mit 2 bis 8, vorzugsweise 2 bis 4, Hydroxylgruppen aufweisende Verbindungen mit einem Molekulargewicht von etwa 1000 bis 10 000, vorzugsweise 1250 bis 6000, besonders bevorzugt 1500 bis 4500. Dies sind mindestens zwei Hydroxylgruppen aufweisende Polyester, Polyether, Polythioether, Polyacetale, Polycarbonate und Polyesteramide, sowie auch Polybutadienverbindungen, wie sie für die Herstellung von homogenen, gegebenenfalls zellförmigen oder schaumstoffartigen Polyurethanen an sich bekannt sind. Besonders bevorzugt sind Polyether, aber auch Polyester.

Die in Frage kommenden Polyether sind solche der an sich bekannten Art und werden z.B. durch Polymerisation von Epoxiden wie Ethylenoxid, Propylenoxid, Butylenoxid, Tetrahydrofuran, Styroloxid oder Epichlorhydrin mit sich selbst, z.B. in Gegenwart von Lewis-Katalysatoren, oder durch Anlagerung dieser Epoxide, vorzugsweise von Ethylenoxid und/oder Propylenoxid, gegebenenfalls im Gemisch oder nacheinander, an Startkomponenten mit reaktionsfähigen Wasserstoffatomen, wie Wasser, mehrwertige Alkohole, Ammoniak oder mehrwertige Amine, z.B. Ethylenglykol, Propylenglykol-1,3 oder -1,2, Trimethylolpropan, Glycerin, Sorbit, 4,4'-Dihydroxydiphenylpropan, Anilin, Ethanolamin oder Ethylendiamin hergestellt. Auch Sucrosepolyether, sowie auf Formit oder Formose gestartete Polyether kommen in Frage. Polyether mit überwiegend sekundären Hydroxylendgruppen sind erfindungsgemäss bevorzugt.

Es können aber auch Polythioether, insbesondere Kondensationsprodukte von Thiodiglykol mit sich selbst und/oder mit anderen Glykolen, Dicarbonsäuren, Formaldehyd, Aminocarbonsäuren oder Aminoalkoholen eingesetzt werden.

Die in Frage kommenden, Hydroxylgruppen aufweisenden Polyester sind z.B. Umsetzungsprodukte von mehrwertigen, vorzugsweise zweiwertigen, und gegebenenfalls zusätzlich drei- und mehrwertigen Alkoholen mit mehrwertigen, vorzugsweise zweiwertigen, Polycarbonsäuren oder deren Anhydride oder entsprechenden Polycarbonsäureestern von niedrigen Alkoholen.

Die Polycarbonsäuren können aliphatischer, cycloaliphatischer, aromatischer, araliphatischer und/oder heterocyclischer Natur und gegebenenfalls, z.B. durch Halogenatome, substituiert, sie können aber auch ungesättigt sein.

Als Beispiele für solche Carbonsäure und deren Derivate seien genannt: Adipinsäure, Sebacinsäure, Acelainsäure, Dodecandisäure, Phthalsäure, Isophthalsäure, Tetrahydrophthalsäureanhydrid, Tetrachlorphthalsäureanhydrid, Endomethylentetrahydrophthalsäureanhydrid, Glutarsäureanhydrid, Maleinsäureanhydrid, Fumarsäure, dimerisierte und trimerisierte ungesättigte Fettsäuren, Terephthalsäuredimethylester und Terephthalsäure-bis-glykolester.

Als mehrwertige Alkohole kommen z.B. Ethylenglykol, Propylenglykol-1,2 und -1,3, Butylenglykol-1,4 und -2,3, Hexandiol-1,6, Decandiol-1,10, Neopentylglykol, 1,4-Bis-hydroxymethylcyclohexan, 2-Methyl-1,3-propandiol, Glycerin, Trimethylolpropan, Hexantriol-1,2,6, Pentaerythrit, Chinit, Mannit und Sorbit, Formit oder Formose, Methylglykosid, ferner Di-, Tri-, Tetra-ethylenglykole, -propylenglykole sowie -butylenglykole in Frage. Die Polyester können anteilig auch endständige Carboxylgruppen aufweisen.

Auch Polyester aus Lactonen, z.B. ε-Caprolacton, oder aus Hydroxycarbonsäuren, z.B. ω-Hydroxycapronsäure, sind einsetzbar, insbesondere wenn sie zusätzliche Komponenten, wie Diethylenglykol oder 1,4-Butandiol, enthalten, um ihre hohe Kristallinität zu mindern.

Als Polyacetale sind z.B. die aus Glykolen und Formaldehyd herstellbaren Verbindungen geeignet.

Als Hydroxylgruppen aufweisende Polycarbonate kommen solche der an sich bekannten Art in Betracht, z.B. die durch Umsetzung von Propandiol-1,3, Butandiol-1,4 und/oder Hexandiol-1,6, Di-, Tri- oder Tetraethylenglykol oder Thiodiglykol, mit Diarylcarbonaten, z.B. Diphenylcarbonat, oder Phosgen, hergestellt werden können.

Auch Hydroxylendgruppen aufweisende Polybutadiene sind erfindungsgemäss geeignet, da sie besonders elastische und hydrolysenstabile Produkte ergeben. Als Komponente A) können gegebenenfalls auch Polyhydroxylverbindungen eingesetzt werden, in welchen hochmolekulare Polyaddukte bzw. Polykondensate oder Polymerisate in feindisperser oder auch gelöster Form enthalten sind.

Derartige Polyhydroxylverbindungen werden z.B. erhalten, wenn man Polyadditionsreaktionen (z.B Umsetzungen zwischen Polyisocyanaten und aminofunktionellen Verbindungen) bzw. Polykondensationsreaktionen (z.B. zwischen Formaldehyd und Phenolen und/oder Aminen in situ in o.g., Hydroxylgruppen aufweisenden Verbindungen, ablaufen lässt. Derartige Verfahrensweisen sind beispielsweise in den DE-B 1 168 075, 1 260 142 sowie in den DE-A 2 324 134, 2 423 984, 2 512 385, 2 513 815, 2 550 796, 2 550 797, 2 550 833, 2 550 862 und 2 633 293 beschrieben. Es ist aber auch möglich, gemäss US-PS 3 869 413 bzw. 2 255 860 eine fertige wässrige Polymerdispersion mit einer Polyhydroxylverbindung zu vermischen und anschliessend aus dem Gemisch das Wasser zu entfernen.

Auch durch Vinylpolymerisate modifizierte Polyhydroxylverbindungen, wie sie z.B. durch Polymerisation von Styrol und Acrylnitril in Gegenwart von Polyethern (US-PS 3 383 351, 3 304 273, 3 523 093 und 3 110 695, und in der DE-B 1 152 536), oder Polycarbonatpolyolen (DE-PS 1 769 795, US-PS 3 637 909) erhalten werden, sind für das erfindungsgemässe Verfahren geeignet. Bei Verwendung von Polyetherpolyolen, welche gemäss den DE-A 2 442 101, 2 644 922 und 2 646 141 durch Pfropfpolymerisation mit Vinylphosphonsäureestern, sowie gegebenenfalls (Meth)Acrylnitril, (Meth)Acrylamid oder OH-funktionellen, (Meth)Acrylsäureestern modifiziert wurden, erhält man Kunststoffe von besonderer Flammwidrigkeit. Polyhydroxylverbindungen, in welche durch radikalische Polymerisation mittels ungesättigter Carbonsäuren, sowie gegebenenfalls weiterer olefinisch ungesättigter monomerer Carboxylgruppen eingeführt wurden, können mit besonderem Vorteil in Kombination mit mineralischen Füllstoffen eingefüllt werden. Weiterer Vertreter der genannten, erfindungsgemäss zu verwendenden Verbindungen sind z.B. in High Polymers, Vol. XVI, «Polyurethans, Chemistry and Technology», verfasst von Saunders-Frisch, Interscience Publishers, New York, London, Band I, 1962, Seiten 32 bis 42 und Seiten 44 bis 54 und Band II, 1964, Seiten 5 bis 6 und 198 bis 199, sowie

im Kunststoff-Handbuch, Band VII, Vieweg-Höchtlen, Carl-Hanser-Verlag, München, 1966, z.B. auf den Seiten 45 bis 71, sowie in der DE-A 2 854 384 ausführlich beschrieben.

Es ist selbstverständlich möglich, Mischungen der o.g. Polyhydroxylverbindungen einzusetzen.

B)

Als Komponente B) werden nach ausgewählten Verfahren hergestellte dimere bzw. niederoligomere 4,4'-Diphenylmethan-uretdion-diisocyanate der Formel

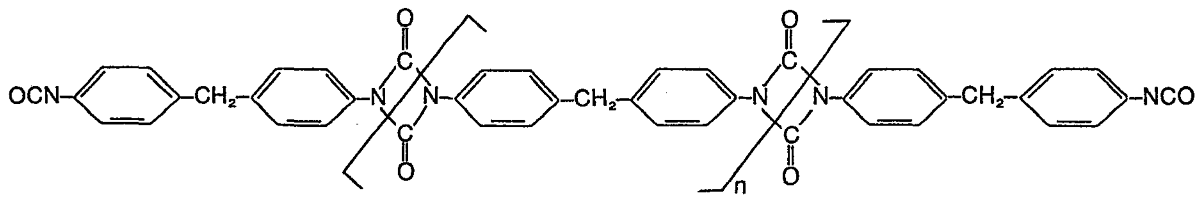

wobei n = 0 bis 2,5, vorzugsweise 0 bis 1,5 und besonders bevorzugt 0,1 bis 1,5 ist, verwendet.

Es handelt sich somit um dimere, sowie niederoligomere Uretdiondiisocyanate, während die üblicherweise bei der «Dimer»-Herstellung aus 4,4'-Diphenylmethandiisocyanat anfallenden Produkte hochschmelzende und hohe Anteile von stark oligomerisierten Uretdionen ($n \geq 2,5$) darstellen. Diese höhermolekularen Uretdione mit $n \geq 2,5$ sind jedoch für die erfindungsgemässe Reaktion nicht geeignet. Im besten Fall können solche Polyuretdione etwa die Wirkung von Füllstoffen aufweisen.

Das ausgewählte Verfahren zur Herstellung der erfindungsgemäss geeigneten Uretdion-diisocyanate des Diphenylmethans besteht darin, dass in wenig polaren Lösungsmitteln, z.B. Toluol, Essigester oder Aceton, die Dimerisierungsreaktion bei tiefen Temperaturen und insbesondere auch die Aufarbeitung und Trocknung der Produkte bei niedrigen Temperaturen (unterhalb von etwa 50 °C) durchgeführt wird (s. Herstellungsbeispiele). Besonders bevorzugt sind die niederoligomeren Uretdiondiisocyanate der obigen Formel mit n = 0,1 bis 1,5, da sich hierdurch ein besonders versteiftes Hartsegment ausbildet, das zu verbesserten Eigenschaften des Polyurethans führt.

Man kann auch die oligomeren Uretdiondiisocyanate des Diphenylmethan-4,4'-diisocyanats direkt in Weichmachern, wie Phthalaten oder Phosphaten, z.B. Dioctylphthalat, Diisodecylphthalat, Dibenzylphthalat, Butyl-benzyl-phthalat, oder Trioctylphosphat, Trikresylphosphat herstellen, wobei die Temperatur bei der Herstellung möglichst nicht über 50 °C liegt und vorzugsweise Raumtemperatur beträgt. Die Suspension der Uretdiondiisocyanate enthält üblicherweise 10 bis 60 Gew.-%, vorzugsweise 20 bis 40 Gew.-% des (niederoligomeren) Dimeren im Weichmacher. Derartige Suspensionen können auch bei der Polyurethanherstellung verwendet oder mitverwendet werden, wobei der Weichmachergehalt im Polyurethan üblicherweise 0,5 bis 50 Gew.-%, vorzugsweise 1 bis 25 Gew.-% in der Polyurethanmischung beträgt. Durch Ausfällen der Uretdiondiisocyanate mittels z.B. Petrolether können die entsprechenden Pulver analysiert und auf Einhaltung der erfindungsgemäss charakterisierten Grenzen von n kontrolliert werden.

Da die durch einen geeigneten Dimerisierungskatalysator initiierte Dimerisierungsreaktion von 4,4'-Diphenylmethandiisocyanat deutlich rascher abläuft als die Reaktion des monomeren Diisocyanates mit der H-aciden Verbindung A), insbesondere mit Polypropylenethern mit sekundären Hydroxylgruppen, kann man auch so verfahren, dass das Uretdiondiisocyanat B) in Gegenwart von A) in situ erzeugt wird und mit dieser feinteiligen Suspension die erfindungsgemässen Einkomponentensysteme direkt aufbaut (s. Beispiele).

Die erfindungsgemässen Einkomponentensysteme werden vorzugsweise aus modifizierten 4,4'-Diphenylmethanuretdion-diisocyanaten (B/2) hergestellt.

Die Modifizierung von B)/1 erfolgt dabei mit zwei- oder mehrfunktionellen, niedermolekularen Verbindungen, welche an aliphatische und/oder cycloaliphatische Gruppen gebundene Hydroxylgruppen und/oder an aromatische, einschliesslich heterocyclische Ringe mit aromatischem Charakter, gebundene $NH_2$-Gruppen und Molekulargewichte zwischen 62 und 400 aufweisen. Bevorzugt sind dabei niedermolekulare Diole mit an aliphatische und/oder cycloaliphatische Gruppen gebundenen Hydroxylgruppen, sowie aromatische Diamine des genannten Molekulargewichtsbereichs.

Die niedermolekularen Modifizierungskomponenten für B/1 sind Verbindungen, die üblicherweise als Kettenverlängerungsmittel oder Vernetzungsmittel dienen können. Diese Verbindungen weisen in der Regel 2 bis 8, vorzugsweise 2 bis 4, besonders bevorzugt jedoch 2 gegenüber Isocyanaten reaktionsfähige Wasserstoffatome wie Hydroxyl- und/oder Aminogruppen auf. Es können selbstverständlich auch Mischungen von verschiedenen Verbindungen des Typs C) verwendet werden. Als Beispiele für derartige Verbindungen seien genannt: Ethylenglykol, Trimethylenglykol, Butandiol-1,4, Hexandiol-1,6, Neopentylglykol, 1,4-Bis-hydroxymethylcyclohexan, 1,4-Dihydroxycyclohexan, sowie weniger bevorzugt Diole mit sekundären Hydroxylgruppen, z.B. Propylenglykol, Butandiol-2,3, oder Pentandiol-2,5. Als mehrwertige Verbindungen seien genannt: Trimethylolpropan, Trimethylolethan, Hexantriol-1,2,6, Glycerin, Pentaerythrit, Chinit, Mannit, Sorbit, Rizinusöl, sowie Di-, Tri- und Tetra-ethylen-, -propylen-, und -butylen-glykole, ferner Dihydroxyethylhydrochinon, Formose oder Formit. Ferner sind geeignet tertiäraminhaltige Di- oder Polyole, z.B. n-Methyldiethanolamin, Triethanolamin oder N,N'-Bishydroxyethylpiperazin. Bevorzugt werden jedoch anstelle von niedermolekularen Polyolen niedermolekulare aromatische Diamine als modifizierende Verbindungen. Unter aromatischen Polyaminen sollen auch solche Amine verstanden werden, welche die Aminogruppe an heterocyclische Reste mit aromatischem Charakter gebunden enthalten. Als aromatische Polyamine sind z.B. geeignet: Toluylendiamine, Diphenylmethan-4,4'- und/oder 2,4'- und/oder 2,2'-diamine, 3,3'-Dichlor-4,4'-diaminodiphenylmethan, 3-($C_1$–$C_8$)-Alkyl-4,4'-diaminodiphenylmethane, die 3,3'-Di($C_1$–$C_4$)-4,4'-diaminodiphenylmethane sowie die 3,3',5,5'-Tetra-($C_1$–$C_4$)-alkyl-4,4'-diphenylmethane, die 4,4'-Diaminodiphenyl-sulfide, -sulfoxide oder -sulfone, Ethergruppen aufweisende Diamine gemäss DE-A 1 770 525 und 1 809 172 (US-PS 3 654 364 und 3 736 295) gegebenenfalls in 5-Stellung substituierte 2-Halogen-1,3-phenylendiamine (DE-A 2 001 772, 2 025 896 und 2 065 869), Bisanthranilsäureester (DE-A 2 040 644 und 2 160 590), 2,4-Diaminobenzoesäureester nach DE-A 2 025 900, sowie durch eine oder zwei ($C_1$–$C_4$)-Alkylgruppen substituierte Toluylendiamine. Besonders bevorzugt sind 3,5-Diethyl-2,4- und/oder -2,6-diaminotoluol, unsymmetrisch tetraalkylsubstituierte Diaminodiphenylmethane, z.B. 3,3'-Diethyl-5,5'-diisopropyl-4,4'-diaminodiphenylmethan, 4,4'-Diaminobenzanilid, sowie 3,5-Diaminobenzoesäure-($C_1$–$C_4$)-alkylester, sowie 2,4'-Diaminodiphenylmethan.

Die aromatischen Diamine sind bevorzugt vor den Glykolen. Es sind jedoch auch Diole oder Diamine mit zusätzlichen Gruppen einsetzbar, z.B. Adipinsäure-bis-(2-hydroxyethyl)-ester, Terephthalsäure-bis-(2-hydroxyethyl)-ester, Diolurethane, Diol-harnstoffe oder Polyole, welche Sulfonat- und/oder Phosphonatgruppen enthalten, z.B. 1,6-Hexamethylen-bis-(2-hydroxyethylurethan), 4,4'-Diphenylmethan-bis-(2-hydroxyethylharnstoff) oder das Addukt von Na-Bisulfit an Butendiol-1,4, bzw. dessen Alkoxylierungsprodukte. Weitere niedermolekulare Verbindungen, welche zur Modifizierung von B)/1 eingesetzt werden, werden ausführlich in der DE-A 2 854 384 beschrieben.

Ferner können in üblicher Weise gegebenenfalls gegenüber Isocyanaten monofunktionelle Verbindung in Anteilen von 0,01 bis 10 Gew.-% als sogenannter Kettenabbrecher mitverwendet werden. Derartige monofunktionelle Verbindungen sind z.B. Monoamine, wie Butyl- oder Dibutylamin, Stearylamin, Pyrrolidin, Anilin oder Tolylamin, Butanol, 2-Ethylhexan, Cyclohexanol oder Ethylenglykolmonoethylether.

Die Herstellung der modifizierten Diphenylmethanuretdion-diisocyanate B)/2 erfolgt durch Umsetzung von m-Äquivalenten der modifizierenden zwei- oder mehrfunktionellen niedermolekularen Verbindung mit m.(1 bis 1,5) + (0,8 bis 1,5) NCO-Äquivalenten der unmodifizierten Verbindung B)/1.

Eine Übersicht über die einzusetzenden Äquivalente wird in der folgenden Tabelle gegeben:

Tabelle

| m | niedermolekulare Verb. (in Äq.) | MDI-uretdiondiisocyanate B)/1 bei NCO/OH niedriger Wert | (1:1) (in Äq.) | höchster Wert |
|---|---|---|---|---|
| 0 | 0 | 0,8 | 1 | 1,5 |
| 1 | 1 | 1,8 | 2 | 3,0 |
| 2 | 2 | 2,8 | 3 | 4,5 |
| 3 | 3 | 3,8 | 4 | 6,0 |
| 4 | 4 | 4,8 | 5 | 7,5 |
| 5 | 5 | 5,8 | 6 | 9,0 |
| 6 | 6 | 6,8 | 7 | 10,5 |
| 7 | 7 | 7,8 | 8 | 12,0 |

m Äquivalente der modifizierenden, niedermolekularen Verbindung werden mit m·(1 bis 1,5) + (0,8 bis 1,5) NCO-Äquivalent B)/1 eingesetzt.

Beträgt z.B. m = 4, und man verwendet eine niedermolekulare bifunktionelle Verbindung, so werden 4 Mol Diol oder Diamin mit 4,8 bzw. 5 bzw. bis 7,5 Mol des MDI-uretdiondiisocyanats B)/1 umgesetzt (und dieses z.B. mit 1 Mol einer bifunktionellen, höhermolekularen Polyhydroxyverbindung A) vermischt).

Bevorzugt setzt man m-Äquivalente der modifizierenden niedermolekularen Verbindung mit m.(1 bis 1,5) + (1 bis 1,5) NCO-Äquivalenten B)/1 um. Besonders bevorzugt ist die Umsetzung von m-Äquivalenten der modifizierenden, niedermolekularen Verbindung mit m.(1 bis 1,2) + (1 bis 1,2) NCO-Äquivalenten B)/1.

Es ist bevorzugt, die Umsetzung der modifizierenden, niedermolekularen Verbindung mit B)/1 in situ in der höhermolekularen Polyhydroxylverbindung A) vorzunehmen, wobei man zu der Mischung von B)/1 in A) die modifizierende Verbindung zugibt oder zu der Mischung der modifizierenden, niedermolekularen Verbindung und A) die Verbindung B)/1 zusetzt. In der Suspension in A) bildet sich zunächst unter einem gewissen Viskositätsanstieg das modifizierte, höhermolekulare Diphenylmethan-uretdiondiisocyanat B)/2.

Es ist jedoch auch möglich, das modifizierte Uretdiondiisocyanat B)/2 separat aus den Komponenten B)/1 und der modifizierenden, niedermolekularen Verbindung herzustellen. Dies erfolgt im allgemeinen in inerten Lösungsmitteln oder gegebenenfalls Carbonsäureester- oder Phosphatester-haltigen Weichmachern. Das so hergestellte modifizierte Uretdiondiisocyanat B)/2 kann abfiltriert, gegebenenfalls auf die notwendige Feinheit zerkleinert und dann der höhermolekularen Polyhydroxyverbindung A) zugesetzt werden. Andererseits kann auch die gebildete Dispersion von B)/2 in Weichmachern dem Polyol A) zugesetzt werden.

Als unmodifizierte Diphenylmethan-uretdiondiisocyanate B)/1 wird ein solches mit n = 0 bis

2,5, vorzugsweise von 0 bis 1,5 und besonders bevorzugt von 0,1 bis 1,5, eingesetzt.

Die Menge an niedermolekularer, modifizierender Verbindung kann Werte von m bis zu 7 aufweisen, d.h. irgendeinen Wert oberhalb von 0 bis 7,0. Es ist jedoch bevorzugt, bei Polyhydroxylverbindungen des unteren Bereichs (etwa Molekulargewicht 1000 bis 1500) die Modifizierungsmenge bis n = 3 zu wählen, bei mittleren Molekulargewichten, etwa 1500 bis 3000, n bis 5 zu wählen, während man für die noch höhermolekulareren Polyhydroxylverbindungen die Werte bis 7 einsetzt.

Als Katalysatoren C) für die erfindungsgemässen, lagerstabilen Einkomponentensysteme werden mit besonders gutem Effekt organische Blei- und/oder Zinnverbindungen verwendet, gegebenenfalls unter Mitverwendung weiterer, üblicher Polyurethan-Katalysatoren, insbesondere von tertiäraminhaltigen Katalysatoren.

Von den Bleiverbindungen werden Verbindungen aus folgender Gruppe bevorzugt:

a) organische Salze des zweiwertigen Bleis mit Carbonsäuren,

b) Dithiocarbamate des zweiwertigen Bleis der Formel

$$Pb(-S-C-N<^{R_1}_{R_2})_2$$

worin $R_1$ und $R_2$ verschieden sein können und einen $C_1$–$C_{20}$-Alkylrest bedeuten,

c) Tetraorgano-Blei-IV-Verbindungen, wobei der organische Rest einen niederen Alkylrest, wie z.B. Methyl oder Ethyl, bedeutet und

d) Verbindungen aus 1,3-Dicarbonylverbindungen, wie z.B. Acetylaceton, mit zweiwertigem Blei verwendet.

Besonders bevorzugt werden die Salze des zweiwertigen Bleis mit Carbonsäure, wie z.B. Essigsäure, Propionsäure, Ethylhexansäure, Octansäure, Laurinsäure, Ricinolsäure, Stearinsäure, Adipinsäure, Trimethyladipinsäure, Naphthensäure. Ganz besonders bevorzugt sind das Blei-(II)-octoat und Blei-(II)-naphthenat.

Als organische Zinnverbindungen kommen Zinn-(II)-salze von Carbonsäuren wie Zinn-acetat, Zinn-octoat, Zinn-ethylhexanoat und Zinn-laurat, und die Zinn-(IV)-Verbindungen, z.B. Dibutylzinnoxid, Dibutylzinndichlorid, Dibutylzinndiacetat, Dibutylzinndilaurat, Dibutylzinnmaleat oder Dibutylzinndiacetat in Betracht.

Bevorzugt verwendet werden bei den Zinnkatalysatoren jedoch schwefelhaltige Zinnverbindungen der Formel

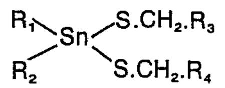

worin

$R_1$ und $R_2$ Alkylreste mit 1 bis 10 C-Atomen, $R_3$ und $R_4$ Wasserstoff und/oder $C_1$–$C_{18}$-Alkyl und/oder den Rest $COOR_1$ bedeuten.

Als Beispiele seien Di-(n-octyl)-zinn(IV)-bis-thiomethyl oder Dimethyl-zinn-bis-thiolauryl genannt. Besonders bevorzugt verwendet werden die Verbindungen, in denen $R_3$ und $R_4$ den genannten Esterrest bedeuten, z.B. Dimethyl-zinn-bis-thioglykolsäurehexylester oder Dibutylzinn-bis-thioglykol-octylester. Selbstverständlich können die o.g. Katalysatoren als Gemische eingesetzt werden, insbesondere dann, wenn die niedermolekularen Kettenverlängerer und die höhermolekularen Polyole gleichzeitig primäre und sekundäre OH-Gruppen tragen, bzw. wenn die H-aciden Verbindungen verschiedene Reaktivitäten aufweisen (vgl. Beispiel 13). Von Interesse sind auch Kombinationen der organischen Metallverbindungen mit Amidinen, Aminopyridinen, Hydrazinopyridinen (DE-A 2 434 185, 2 601 082 und 2 603 834), oder 1,4-Diaza-bicyclo-2.2.2-octan und/oder üblichen, Tertiäramin-Katalysatoren, wie sie in der Polyurethanchemie üblicherweise verwendet werden.

Wie noch näher ausgeführt wird, sind die genannten Blei- und/oder Zinnverbindungen für die spezielle Reaktivkomposition von besonderer Bedeutung. Sie zeigen in diesem System besonders selektive Katalysewirkungen, wie sie von den üblichen Katalysatoren nicht in diesem Masse gezeigt werden. Auch sind die entstehenden Polyurethankunststoffe mit diesen speziellen Katalysatoren andersartig katalysierten Produkten aus diesen Einkomponentensystemen überlegen.

Die Bleikatalysatoren sind dabei von besonderer Wirksamkeit und Effektivität, wenn in dem System Polyetherpolyole mit sekundären Hydroxylgruppen, z.B. Polypropylenoxidglykole, verwendet werden.

Bei Einsatz von Polyesterpolyolen mit im wesentlichen primären Hydroxylgruppen sind dagegen die Zinnverbindungen, besonders die Zinn/Schwefel-Katalysatoren, von besonderer Wirksamkeit. Die Katalysatoren werden in Regel in einer Menge von 0,001 bis 5 Gew.-%, vorzugsweise von 0,01 bis 2 Gew.-%, bezogen auf A) + B) eingesetzt.

Gegebenenfalls können der Mischung oder den Ausgangskomponenten, vorzugsweise der Polyolkomponente A), füllstoffartige, feinteilige Polyaddukte D), vorzugsweise in einer mittleren Teilchengrösse von 1 bis 70 µ, in Mengen von 0 bis 25 Gew.-%, bezogen auf die Gesamtmischung, bevorzugt 0 bis 12,5, besonders bevorzugt 2,5 bis 12,5 Gew.-% (bezogen auf die Gesamtmischung) zugesetzt werden. Die Polyaddukte werden dabei aus Polyisocyanaten und mindestens einer, gegenüber NCO-Gruppen zwei oder mehrere reaktive Gruppen aufweisenden, relativ niedermolekularen Verbindungen des Molekulargewichts 32 bis 400, vorzugsweise 62 bis 400, hergestellt. Als Polyisocyanate kommen dabei die üblichen, zur Polyurethansynthese benutzten Polyisocyanate, vorzugsweise Diisocyanate, in Betracht, wie sie ausführlich beispielsweise in der DE-A 2 854 834 auf den Seiten 8 bis 11 angeführt sind. Als Diisocyanate seien genannt: 1,6-Hexamethylen-diisocyanat, 2,4- und/oder 2,6-Hexahydro-toluylendiisocyanat, Perhydro-2,4'- und/oder -4,4'-diphenylmethandiisocyanat, 1-Isocyanato-3,3,5-trimethyl-5-isocyanatomethyl-cyclohexan, 2,4- und/oder 2,6-Toluylen-diisocyanat, Diphenylmethan-2,4'- und/oder -4,4'-diisocyanat, einschliesslich seiner

alkyl- und chlorsubstituierten Derivate und Naphthylen-1,5-diisocyanat.

Als relativ niedermolekulare Verbindungen kommen die bereits unter den modifizierenden, niedermolekularen Verbindungen unter B 2 genannten Verbindungen in Frage, zusätzlich jedoch auch Verbindungen mit aliphatisch gebundenen Amin-, Hydrazin-, Hydrazid- (einschliesslich Semicarbazid- und Carbazinsäureester-Gruppen, in Frage. Als solche seien genannt: Hydrazin, Ethylendiamin, Hexamethylendiamin, 1,4-Diaminocyclohexan, 4,4'-Diamino-dicyclohexylmethan, Isophorondiamin, meta- und/oder para-xylylendiamin, 1,6,11-Triaminoundecan und Lysinmethylester. Neben Hydrazin sind N,N'-Dimethyl-hydrazin, sowie die Dihydrazidverbindungen, wie z.B. die Polycarbonsäurehydrazide wie Carbodihydrazid, Oxalsäuredihydrazid, Adipinsäuredihydrazid, Terephthalsäuredehydrazid, Weinsäuredihydrazid, und die Gruppe der Bis-Semicarbazide, z.B. Hexamethylen-bis-semicarbazid, und die Gruppe der Biscarbazinester, z.B. Ethylenglykol-biscarbazid, geeignet. Ebenso Verbindungen mit Hydrazid und/oder Semicarbazid und/oder Carbazinestergruppen, z.B. β-Semicarbazido-propionsäurehydrazid, sowie auch Aminohydrazidverbindungen, wie z.B. β-Aminopropionsäure-hydrazid.

Diese Verbindungen werden in etwa äquivalenten Mengen in Lösungsmitteln, Weichmachern oder auch gegebenenfalls bereits innerhalb der Polyole A) umgesetzt und in feinteiliger Suspension der Reaktionsmischung zugefügt.

Als gegebenenfalls einzusetzende Hilfs- und Zusatzstoffe E) seien genannt: Farbstoffe oder Pigmente, Füllstoffe wie Silicagel, Gips, Talkum, Aktivkohle, UV-Absorptionsmittel oder Stabilisatoren wie phenolische Antioxidantien, Lichtschutzmittel, Treibmittel, oberflächenaktive Zusatzstoffe wie Emulgatoren oder Schaumstabilisatoren, gegebenenfalls Zellregler, Antiblockmittel, Silikone, Flammschutzmittel, oder fungistatisch und/oder bakteriostatisch wirkende Substanzen.

Als Füllstoffe sind z.B. Fasermaterialien, d.h. alle an sich bekannten anorganischen und/oder organischen, faserförmigen Verstärkungsmaterialien einsetzbar, z.B. Glasfasern, vorzugsweise in Längen zwischen 20 und 60 mm, Graphitfasern und Asbestfasern oder Fasermaterialien, die von einem organischen Polymeren stammen, z.B. von einem Polyester wie Polyethylenterephthalat, oder vorzugsweise aromatischen Polyamiden, wie dem m-Phenylen/Isophthalsäurepolyamid, oder dem Poly-p-phenylen-terephthalamid, oder auch Polycaprolactam. Diese Fasermaterialien können auch als Matte, Band, durchgehende Fasern, Vlies, Stoffseil oder als Stapelfaserwirrgemisch vorliegen. Bevorzugt sind Glasfasern, die mit Schlichten ausgerüstet sind, um den Fasern eine Affinität zu Polyurethanen zu verleihen. Die einzubauende Füllstoffmenge hängt von der gewünschten Verbesserung der mechanischen Eigenschaften ab, im allgemeinen werden 5 bis 60 Gew.-% Fasermaterial angewendet.

Zur Herstellung der erfindungsgemässen, langzeitlagerstabilen, heterogenen Einkomponenten-Systeme kann das Diphenylmethan-uretdiondiisocyanat (n = 0 bis 2,5) in Form eines feinen Pulvers, vorzugsweise der Teilchengrösse 1 bis 70 µ, in dem entsprechenden höhermolekularen Polyol A), z.B. Polyether oder Polyester, suspendiert werden. Das NCO/OH-Verhältnis beträgt hierbei beim unmodifizierten Uretdiondiisocyanat 0,8 bis 1,5, vorzugsweise 1,0 bis 1,5, besonders bevorzugt 1,0 bis 1,2, wobei das Uretdiondiisocyanat als Diisocyanat betrachtet wird, unter Berücksichtigung nur der freien NCO-Gruppen, nicht der Uretdiongruppierung mit ihrer latenten NCO-Gruppe.

Bei den durch die niedermolekularen Verbindungen modifizierten Uretdiondiisocyanaten B)/2 werden diese im Molverhältnis von m.(1 bis 1,5) + (0,8 bis 1,5) NCO-Gruppen pro reaktive Gruppe der höhermolekularen Hydroxylverbindung A) eingesetzt.

Bei hochviskosen oder festen, höherschmelzenden (ca. 45 bis 65 °C) Polyolen wird die Suspension durch kurzfristiges Erwärmen auf z.B. 50 bis 70 °C hergestellt, um eine homogene Verteilung des nicht-schmelzenden Uretdiondiisocyanats B) im Polyol A) zu gewährleisten. Dabei erhält man je nach Viskosität bzw. Schmelzverhalten der Ausgangspolyole gut giessbare, rakelfähige, pastenartige oder feste Polyol/Uretdion-Diisocyanat-Kombinationen. Diese Reaktivmischungen stellen dabei eine heterogene Dispersion des Uretdiondiisocyanats B) im Polyol dar. Die gewünschte Hitzevernetzung dieser Mischungen erfolgt erst nach Zugabe geeigneter Katalysatoren (C). Ohne diese geeigneten Katalysatoren verläuft die Reaktion anders, indem nicht eine Umsetzung zwischen NCO-Gruppen und OH-Gruppen zum Polyurethan eintritt, sondern eine schnellere NCO-Dimerisierungsreaktion des Uretdiondiisocyanats, ohne bzw. mit nur ungenügendem Aufbau von hochmolekularen Polyurethankunststoffen mit guten Eigenschaften.

Man kann auch so verfahren, dass man das Uretdiondiisocyanat B) erst in Gegenwart des entsprechenden höhermolekularen Polyols aus Diphenylmethan-4,4'-diisocyanat in situ erzeugt. Zu diesem Zweck wird zu einer Lösung des Dimerisierungskatalysators (wie z.B. 0,2 bis 3% Tributylphosphin, bezogen auf das Polyol) in das Polyol bei möglichst tiefer Temperatur (0 bis 25 °C) die berechnete Menge an Diphenylmethandiisocyanat langsam zugetropft. Nach einer entsprechenden Nachrührzeit (z.B. 4 bis 6 Stunden) wird der Dimerisierungskatalysator mit entsprechenden Verbindungen wie Schwefelpulver, Tosylester oder Durchleiten mit Luft abgestoppt. Man erhält auf diese Weise Suspensionen der niedrig-oligomeren Uretdiondiisocyanate in den Polyolen, die infolge ihrer geringeren Feststoffteilchengrösse eine höhere Ausgangsviskosität besitzen als solche, die über einfaches Vermischen von vorweg hergestellten gemahlenen Pulvern von oligomeren Uretdiondiisocyanaten B) in Polyolen hergestellt wurden (vgl. Beispiel 2).

Das mechanische Werteniveau der Polyurethanelastomeren kann durch Mitverwendung von niedermolekularen Kettenverlängerungsmitteln zu der Reaktivmischung unter Modifizierung der Uretdiondiisocyanate B) in weitem Bereich variiert werden. Als niedermolekulare Verbindungen werden bevorzugt Diole, wie auch aromatische Diamine eingesetzt. Dabei wird zur Herstellung solcher, hartsegmentreicher Einkomponentensysteme im allgemeinen das Diol oder Diamin der gegebenenfalls bereits Katalysator-enthaltenden Suspension des Uretdiondiisocyanats B) im höhermolekularen Polyol A) zugesetzt, wobei die Menge des eingesetzten Uretdiondiisocyanats bereits entsprechend hoch ist, um sich mit der Verbindung zum niedermolekularen, modifizierenden Isocyanat umzusetzen. Es werden auch für diese Reaktion nur die freien NCO-Gruppen im Uretdiondiisocyanat zur Berechnung angesetzt.

Es erfolgt eine langsame Vorreaktion der niedermolekularen, modifizierenden Verbindung mit dem in A) heterogen vorliegenden MDI-Uretdiondiisocyanat. Die von der Reaktivität dieser Verbindung abhängige Vorreaktion ist nach einigen Stunden bei Raumtemperatur beendet und man erhält erst nunmehr die eigentlichen, Langzeitlagerstabilen, heterogenen, hitzehärtbaren Einkomponentensysteme. Diese Vorreaktion von B) mit den niedermolekularen, modifizierenden Kettenverlängerern zum modifizierten Uretdiondiisocyanat B)/2 ist mit einem gewissen Viskositätsanstieg verbunden, so dass je nach Kettenverlängerermenge giessbare, oder zumindest rakelfähige, pastenartige oder auch bei Raumtemperatur feste, jedoch leicht aufschmelzbare (kleiner 70 °C) Kombinationen herstellbar sind.

Es ist jedoch auch möglich, anstelle der in situ-Herstellung der durch Hartsegmente modifizierten Uretdiondiisocyanate in Dispersion in Polyol A) die Herstellung der modifizierten Uretdiondiisocyanate auch in einem separaten Reaktionsschritt vorzunehmen. Hierzu kann man die gesamte Menge des MDI-Uretdiondiisocyanats B)/1 mit der niedermolekularen, modifizierenden Verbindung in einem inerten Lösungsmittel, wie z.B. Toluol, zur Reaktion bringen, das NCO-haltige modifizierte Uretdiondiisocyanat B)/2 absaugen, gegebenenfalls pulverisieren, und dann mit dem Katalysator enthaltenden Polyol A) vermischen, vgl. Beispiel 18). Dieser Verfahrensschritt ist jedoch aufwendig und weniger bevorzugt.

Ein wesentliches Merkmal der erfindungsgemässen Einkomponentensysteme besteht darin, dass man in diesen Systemen auch aromatische Diamine, wie z.B. 4,4'-Diaminodiphenylmethan, 2,4- oder 2,6-Diaminotuluol oder 1,5-Diamino-naphthalin oder 3,5-Diethyl-3',5'-diisopropyl-4,4'-diaminodiphenylmethan mitverwenden kann, ohne den Charakter eines Einkomponentensystems einzubüssen. Werden dagegen diese genannten Diamine in einer der Polyurethanchemie üblichen Verfahrenstechnik mit NCO-Präpolymeren umgesetzt, so resultieren extrem kurze Giesszeiten, so dass ein einwandfreier Verlauf dieser Ansätze im Werkzeugteil nicht möglich ist.

Alle diese Einkomponentensysteme können erst nach Zugabe der geeigneten Katalysatoren C) durch Hitzestoss verfestigt werden. Bei Raumtemperatur tritt auch in Gegenwart dieser Katalysatoren überraschenderweise keine Vernetzungsreaktion ein, so dass man diese Mischungen als Langzeit-lagerstabile Einkomponenten bezeichnen kann. Ohne Katalysatoren tritt selbst oberhalb von 140 bis 160 °C keine Verfestigung ein, wobei die NCO-Reaktionen mit der OH-Gruppe in der Geschwindigkeit gegenüber der weiteren Dimerisierungsreaktion der NCO-Gruppen offenbar unterlegen sind.

Es hat sich gezeigt, dass aus diesen Blei- und/oder Zinnkatalysatoren sich besonders günstige Kombinationen ergeben. So sind zur Herstellung von Einkomponentensystemen mit guter Hitzehärtbarkeit Bleikatalysatoren, insbesondere Bleioctoat und Bleinaphthenat, die überragend wirksamen Katalysatoren, wenn man sekundäre Hydroxylgruppen tragende, höhermokekulare Polyole A), insbesondere Polypropylenoxid-Polyole, als höhermolekulare Verbindungen A) einsetzt.

Zur Verarbeitung von Systemen mit primären Hydroxylgruppen sind jedoch die zinnhaltigen Katalysatoren vorzugsweise geeignet, insbesondere die schwefelhaltigen Zinnkatalysatoren, wie sie unter C) aufgeführt wurden.

Andere, in der Polyurethanchemie vielfach üblicherweise als wirkungsvolle Katalysatoren beschriebene Verbindungen sind bei den erfindungsgemässen Einkomponentensystemen auf Basis Diphenylmethan-uretdiondiisocyanaten in ihren angegebenen Grenzen für n, bzw. deren Vorzugsbereichen, wirksam oder führen nur zu unzureichenden Umsetzungen, was sich dann an den mechanischen Eigenschaften der Kunststoffe deutlich bemerkbar macht (vgl. Beispiel 29).

Es können jedoch, wie angegeben, die üblichen PU-Katalysatoren mitverwendet werden.

Gemeinsames Merkmal dieser, gegebenenfalls auch der nachstehend beschriebenen, hitzehärtbaren Einkomponentensysteme ist es, dass sie sich auch in Gegenwart der genannten wirkungsvollen Blei- und/oder Zinnkatalysatoren bei Raumtemperatur überraschend lagerstabil verhalten, d.h. dass auch bei einer Beobachtungszeit von 3 bis 5 Monaten, z.T. bis 8 Monate, keinerlei Viskositätserhöhung eingetreten war.

Die Verarbeitung der erfindungsgemässen Einkomponentensysteme richtet sich nach deren Beschaffenheit. Flüssige, bei Raumtemperatur giessbare Systeme lassen sich im Giessprozess verarbeiten, gegebenenfalls werden sie vor der Verarbeitung kurz erwärmt, z.B. auf 50 bis 70 °C.

Nicht mehr giessbare, aber noch verlaufende Systeme können z.B. mit einer Rakel auf gewünschte Unterlagen aufgebracht werden und anschliessend durch Hitzestoss verfestigt werden.

Bei Raumtemperatur können plastische Systeme (Pasten) unter Druck- und Formgebung in der Hitze verpresst werden, wobei bei 120 °C bereits 5 bis 15 Minuten zur Verfestigung ausreichend sind.

Feste Systeme, insbesondere auf Basis höherschmelzender Ausgangspolyole (45 bis 65 °C) werden entweder unter Druck- und Formgebung (Spritzguss) oder etwa bei oder oberhalb der

Schmelztemperatur des Polyols verarbeitet. Man kann so verfahren, dass man die vorher hergestellten Einkomponentensysteme in Form fester Granulate in eine über dem Schmelzpunkt des Polyols liegende Temperatur aufgewärmte Form (im allgemeinen kleiner 70 °C) eingebracht werden. Danach wird nach dem Aufschmelzen der Granulate und der damit gegebenen Werkzeugfüllung die Form auf 100 bis 120 °C erwärmt und der Inhalt verfestigt (vgl. Beispiel 32).

Die Verfestigung der erfindungsgemässen Einkomponentensysteme erfolgt bereits in einem Temperaturbereich von 80 bis 140 °C, vorzugsweise 110 bis 130 °C. Die Ausheizdauer kann bei Spritzgusstechnik 4 bis 30 Minuten und bei Giesstechnik eine halbe bis mehrere Stunden betragen. Manchmal ist es vorteilhaft, die Kunststoffe nach Entformen noch einige Zeit bei 100 °C zu tempern, um eine vollständige Durchhärtung zu gewährleisten.

Ein weiteres Merkmal der erfindungsgemässen Einkomponentensysteme ist es, dass es sich um Reaktivmischungen handelt, in denen das hochschmelzende und extrem unlösliche MDI-Uretdiondiisocyanat B) stets in heterogener Phase vorliegt. Eine durch den geeigneten Katalysator verursachte Hitzevernetzung tritt auch dann ein, wenn als niedermolekulare Komponente feste, feinpulverisierte, höherschmelzende Kettenverlängerer wie z.B. Bis-hydroxyethylether von Hydrochinon, 4,4'-Diaminobenzamid oder 1,5-Diaminonaphthalin in Form der feingemahlenen Pulver in der heterogenen Einkomponentenmischung mitverwendet werden.

Man erhält mit den erfindungsgemässen Einkomponentensystemen nach dem Ausheizen stets opake bis milchige und keine transparenten Formkörper.

Durch geeignete Wahl der Ausgangsmaterialien A) und niedermolekularen Verbindungen bei der Durchführung des erfindungsgemässen Verfahrens und insbesondere durch geeignete Menge der Verwendung niedermolekularer Verbindungen, können die mechanischen Eigenschaften der letztlich erhaltenen Polyurethane, beispielsweise Härte und Bruchdehnung oder Zugfestigkeit, dem jeweiligen Verwendungszweck in optimaler Weise angepasst werden.

Die erfindungsgemäss erhältlichen Kunststoffe können in vielfachen Einsatzgebieten Verwendung finden, z.B. als massive Formteile oder geschäumte Formteile mit Integralstruktur, als geschäumte oder massive Flächengebilde, wie z.B. Beschichtungen auf beliebigen Substraten, als Klebstoffe oder als Schaumkunststoffe, ferner als härtbare Dichtungsmittel oder elastische Vergussmassen. In den nachfolgenden Beispielen beziehen sich alle Prozentangaben auf Gewichtsprozente.

Herstellungsbeispiele

Beispiel 1

a) Herstellung von «dimerem» Diphenylmethandiisocyanat nach bekannten Verfahrensweisen

Zu einer Lösung von 1000 g (4,0 Mol) Diphenylmethan-4,4'-diisocyanat (MDI) in 2000 g Toluol werden bei Raumtemperatur 1,5 g Tributylphosphin zugesetzt. Nach kurzer Zeit scheidet sich das dimere MDI aus der Lösung aus, wobei die Temperatur allmählich auf 30 bis 35 °C ansteigt. Der Reaktionsansatz wird weitere 4 Stunden gerührt, der Dimerisierungskatalysator durch Zugabe von 1,5 g Toluolsulfonsäuremethylester gestoppt und das feste MDI-«Dimer» abgesaugt. Nach ca. 5-stündigem Trocknen bei 70 bis 80 °C erhält man ca. 800 g MDI-«Dimer» in Form eines in fast allen Lösungsmitteln unlöslichen, feinen Pulvers. Der Zersetzungspunkt liegt oberhalb von 250 °C.

Da die übliche Titration auf freie NCO-Gruppen in Aceton oder Dimethylformamid mittels Dibutylamin (insbesondere bei hochmolekularem MDI-Dimer, (unlösliche Rückstände, Aufspaltung des Uretdionringes) zu sehr ungenauen Werten führt, wurde der freie NCO-Gehalt durch Reaktion mit Dibenzylamin als sterisch gehinderten Amin bestimmt, wobei die aufgenommene Aminmenge gravimetrisch ermittelt wurde.

Dazu wird eine Suspension von 10 g MDI-Dimer in 150 ml Toluol und 15 g Dibenzylamin (Überschuss) 30 Minuten auf 50 °C erwärmt, danach das Festprodukt isoliert und die Gewichtszunahme bestimmt. (Überraschenderweise lassen sich die NCO-Gruppen des di- und oligomeren MDI-uretdion-diisocyanates auch mit dem sterisch gehinderten Diamin 2,4-Diamino-3,5-diethyl-toluol mit hinreichender Genauigkeit bestimmen. Es entstehen hierbei $NH_2$-terminierte Polyharnstoffe mit noch intaktem Uretdion-Ring (Beispiel 6), wobei bei niedermolekularem MDI-Dimer die Aminaufnahme (Reaktion mit freien NCO-Gruppen) am höchsten ist. Bei einem definierten Additionsprodukt von 2 Mol sterisch gehindertem Amin an 1 Mol des MDI-«Dimeren» ergeben sich bei verschiedenen Polyadditionsgraden vom MDI-Dimer (= n) verschiedene Aminaufnahmen). Aus der Dibenzylaminaufnahme von MDI-Dimer lässt sich der NCO-Gehalt und der Wert von bzw. das Molgewicht erreichnen (s. Tabelle).

Tabelle

| n | Molekular-gewicht | Aminaufnahme g/10 g MDI-dimer | % NCO (berech-net) |
|---|---|---|---|
| 0 | 500 | 7,88 | 16,8 |
| 1 | 750 | 5,26 | 11,2 |
| 2 | 1 000 | 3,94 | 8,4 |
| 3 | 1 250 | 3,15 | 6,7 |
| 4 | 1 500 | 2,62 | 5,6 |

Das nach obiger Darstellungsmethode hergestellte «MDI-Dimer» zeigt eine Aminaufnahme von 3,0 g pro 10 g MDI-Dimer, entsprechend NCO berechnet = 6,4%. Ein solches sog. MDI-«Dimeres» ist für die erfindugsgemässen Polyurethanreaktionen nicht geeignet. Eine gemäss Beispiel 10 durchgeführte Testprobe bleibt dementsprechend unvernetzt und flüssig, zeigt also nicht die Hitzehärtbarkeit zu hochwertigen Polyurethanen.

b) Herstellung von erfindungsgemäss geeigneten Dimeren, bzw. nur niederer Oligomerwerte aufweisenden Diphenylmethan-uretdiondiisocyanaten ($n \leq 2,5$).

Wird wie in Beispiel 1a) die Dimerisierung durchgeführt, das Rohprodukt nach dem Absaugen jedoch mit Petrolether gewaschen und ausschliesslich bei niedrigen Temperaturen bis etwa 30 °C im Vakuum getrocknet, so erhält man ein niedermolekulares Uretdiondiisocyanat einer Aminaufnahme von 7,2 g (entsprechend einem berechneten NCO-Wert von 15,3%, d.h. einem Wert von n von 0,2. Im Gegensatz zu dem hocholigomerisierten MDI-Derivat nach Beispiel 1a) ist dieses Diisocyanat (weitgehend Dimeres) nach Beispiel 10 hervorragend zur Herstellung von hochelastischen Polyurethanen geeignet.

c) Vergleich verschiedener Lösungsmittel bezüglich der Dimerisierungsreaktion zu erfindungsgemässen, bzw. erfindungsgemäss unbrauchbaren höhermolekularen sog. Dimeren des Diphenylmethandiisocyanats

Zu einer Lösung von 100 g Diphenylmethan-4,4'-diisocyanat in jeweils 100 g der unten in der Tabelle angeführten Lösungsmittel, werden 0,25 g Tributylphosphin zugesetzt. Bereits nach kurzer Zeit scheidet sich das Dimere in Form eines weissen Niederschlages aus. Es wird weitere 2 Stunden bei Raumtemperatur gerührt und danach der Dimerisierungskatalysator durch 0,25 g Toluolsulfonsäuremethylester gestoppt. Das MDI-Dimer wird abgesaugt und nach Waschen mit Petrolether ohne Erhitzen bei Raumtemperatur im Vakuum getrocknet.

In der folgenden Tabelle werden die Ausbeuten (% der Theorie), die aufgenommene Menge an sterisch gehindertem Amin pro 10 g Dimer (vgl. Beispiel 1a)) und der daraus berechnete NCO-Gehalt des Dimeren, bzw. der Oligomeren n angegeben.

| Lösungsmittel | MDI-dimer Ausbeute/ % d. Th. | Aminaufnahme g/10 g MDI-dimer | mittleres Molgewicht | % NCO berechnet | n berechnet |
|---|---|---|---|---|---|
| 1. Tetrahydrofuran | 55 | 3,3<br>1,7 | 1 175 | 7,1 | 2,7 |
| 2. Dioxan | 50 | 3,0 | | 3,54 | 7,5 |
| 3. Chloroform | 90 | 3,0 | | 6,4 | 3,3 |
| 4. Methylenchlorid | 88 | | | 6,4 | 3,3 |
| 5. Dichlorethan-1,2 | 92 | 4,4 | 900 | 9,4 | 1,6 |
| 6. Essigester | 62 | 7,49 | 525 | 16,0 | 0,10 |
| 7. Aceton | 75 | 7,44 | 530 | 15,85 | 0,12 |
| 8. Chlorbenzol | 75 | 7,44 | 530 | 15,85 | 0,12 |
| 9. Benzoesäureethylester | 80 | 7,20 | 550 | 15,3 | 0,2 |
| 10. Phthalsäuredioctylester | 72 | 6,70 | 588 | 14,3 | 0,35 |

In stark polarem Lösungsmittel werden also unter diesen Reaktionsbedingungen durchweg hochmolekulare Diphenylmethan-uretdione erhalten (vgl. 1. bis 4. in der Tabelle), die gemäss Beispiel 10 für weitere Polyurethanreaktionen im Sinne der Erfindung ungeeignet sind. Produkte nach 5. ergeben nur relativ weiche Elastomere, sind jedoch noch brauchbar.

Die unter 6 bis 10 charakterisierten Produkte sind niedermolekulare Oligomere (n kleiner = 2,5) und somit für weitere Reaktionen erfindungsgemäss geeignet. Werden diese MDI-Uretdione jedoch einige Zeit bei 100 °C getempert, so erfolgt Dimerisierung bei zu hochmolekularem MDI-Dimer, dass nunmehr ähnlich schlechte Testergebnisse zeigt wie die genannten Produkte 1. bis 5., wenn man sie gemäss Beispiel 10 einsetzt.

d) Einfluss der Temperungsbedingungen auf niedermolekulares MDI-Dimer

Wird das gemäss Beispiel 1b) erhaltene niedermolekulare MDI-Dimer bei 100 °C verschieden lange getempert, so erhält man nach den in untenstehender Tabelle angeführten Zeiten folgende höhermolekularen Produkte:

| | Zeit/ min | Aminaufnahme g/10 g MDI-dimer | NCO berechnet % | n berechnet | mittleres Molgewicht |
|---|---|---|---|---|---|
| 1. | 0 | 7,2 | 15,3 | 0,2 | 550 |
| 2. | 15 | 6,42 | 13,4 | 0,51 | 627 |
| 3. | 30 | 6,75 | 12,1 | 0,77 | 692 |
| 4. | 45 | 5,2 | 11,1 | 1,03 | 757 |
| 5. | 60 | 3,65 | 7,8 | 2,3 | 1 075 |
| 6. | 120 | 0,22 | 0,5 | 65 | 16 800 |

Die Produkte 1 bis 4 ergeben nach Austestung gemäss Beispiel 10 elastische Polyurethane in einem Shore A-Bereich von 55 bis 45. Nur noch bedingt geeignet erweist sich das höhermolekulare Dimere Nr. 5, da es bereits zu weichen Elastomeren führt. Produkt 6 ist für weitere Polyurethanreaktionen nicht mehr geeignet.

Beispiel 2
Herstellung von MDI-Dimer in Gekgenwart eines Polyethers

Zu einer Mischung aus 15 g Tributylphosphin und 2000 g eines linearen Polypropylenglykolethers (OH-Zahl = 56, MG = 2000) wird eine konzentrierte Lösung von 1000 g 4,4'-Diisocyanatodiphenylmethan (MDI) in 400 g Aceton innerhalb einer ½ Stunde zugetropft. Bereits nach kurzer Zeit scheidet sich das oligomere MDI in Form eines feinen Niederschlags aus, wobei die Temperatur allmählich auf 35 bis 40 °C steigt. Ohne Zufuhr von Wärme wird weitere 5 Stunden gerührt und dann der Katalysator durch 15 g pulverisierten Schwefel gestoppt. Nach dem Abziehen von Aceton im Wasserstrahlvakuum bei Temperaturen unterhalb von 25 °C erhält man eine Suspension von MDI-Dimer im Polyether (Viskosität = 50 000 mPa.s); Feststoffgehalt = 33,3%.

Auch nach einer Beobachtungszeit von 5 Monaten erfolgt bei Raumtemperatur kein Viskositätsanstieg, so dass diese Mischung als lagerstabil zu bezeichnen ist.

Eine kleine Probe wird mit Aceton verdünnt, der Feststoff des Uretdiondiisocyanats isoliert, mit Petrolether gewaschen, der NCO-Gehalt durch Reaktion mit dem sterisch gehinderten Dibenzylamin gravimetrisch bestimmt. Der Wert von n ist demnach n = 0,25.

Engt man das Filtrat vorsichtig ein, so zeigt sich, dass der Polyether während der Dimerisierungsreaktion nur einen geringen Viskositätsanstieg von ursprünglich 600 mPa.s auf 850 mPa.s zeigt. Dies bedeutet, dass die Dimerisierungsgeschwindigkeit des Diphenylmethandiisocyanats wesentlich grösser ist als die Reaktionsgeschwindigkeit der NCO-Gruppen mit den OH-Gruppen der Polyether.

Beispiel 3 (Vergleichsversuch)
Herstellung von dimerem Toluylendiisocyanat (TT)

Werden die in Beispiel 1 erwähnten 1000 g MDI durch 696 g (4,0 Mol) TDI ersetzt, so erhält man unter gleichen Arbeitsbedingungen 550 g dimeres TDI (TT). Das weisse Pulver schmilzt bei 150 bis 152 °C und ist zumindest in polaren Lösungsmitteln deutlich besser löslich als das dimere MDI. Die NCO-Titration mit Di-n-butylamin bei Raumtemperatur zeigt 24 bis 25% NCO (keine Uretdionringspaltung), während bei der DMF-Titration (¼ Std., $H_2O$-Bad) 35,5% NCO bestimmbar sind (Uretdionringspaltung zum Biuret).

Beispiel 4
Stabilität des Uretdionrings in MDI-Dimeren

Wird die Suspension von 10 g MDI-Dimer von Beispiel 1b), 100 g Toluol und 15 g Butandiol-(1,4) (hoher OH-Überschuss) unter Rühren 1 Stunde bei 100 °C gehalten, so lässt sich nach dieser Zeit im abgesaugten und getrockneten Reaktionsprodukt IR-spektroskopisch nachweisen, dass der Uretdionring erhalten geblieben ist und lediglich die freien NCO-Gruppen zum Urethan abreagiert sind. Auch in Gegenwart eines Katalysators (Pb-octoat (0,2 g)) erfolgt unter diesen Bedingungen durch das Diol keine Uretdionringspaltung.

Beispiel 5 (Vergleichsversuch mit TT)

Wird das in Beispiel 4 angegebene MDI-Dimer durch 10 g TT nach Beispiel 3 ersetzt, so lässt sich im Endprodukt kein Uretdionring, sondern nur noch Urethan- neben Allophanatgruppen feststellen.

In Gegenwart von Pb-octoat nimmt der Gehalt an Allophanatgruppen zu, wobei hier völlige Uretdionringspaltung erfolgt ist.

Beispiel 6

Wird die in Beispiel 4 genannte Suspension von 10 g MDI-Dimer in 100 g Toluol mit 15 g des aromatischen Diamins 2,4-Diamino-3,5-diethyl-toluol ½ Stunde bei 100 °C gehalten, so erweist sich auch in diesem Falle der Uretdionring als unerwartet stabil. Nachweisbar sind die gebildeten Harnstoffgruppen durch Reaktion des Amins mit den freien NCO-Gruppen, während der Uretdionring erhalten geblieben ist.

Beispiel 7 (Vergleichsversuch)

Ersetzt man das MDI-Dimer durch 10 g TT und setzt mit dem in Beispiel 6 erwähnten Diamin um, so führt dies unter gleichen Bedingungen zu einem Endprodukt, in dem der Uretdionring nicht mehr nachweisbar ist (unterschiedliche Reaktivität des Uretdionrings).

Beispiel 8

100 g eines linearen Polypropylenglykolethers des Molekulargewichts 2000 (OH-Zahl 56) werden mit 25 g MDI-Dimer von Beispiel 1b) innig vermischt und die eingerührte Luft im Vakuum entfernt. Diese bei Raumtemperatur gut mischbare Mischung wird danach einige Stunden auf 120 bis 140 °C erhitzt. Es erfolgt keinerlei Vernetzung und die Suspension bleibt in der Viskosität unverändert. Es wird jedoch dabei ein Verlust der NCO-Gruppen unter Ausbildung weiterer Uretdiongruppen gefunden.

Versetzt man diese vorher erhitzte Suspension nachträglich mit Katalysator, so wird keine Vernetzung zu Polyurethan bei 120 °C beobachtet.

Demgegenüber verhält sich diese Mischung bei 50 °C lagerstabil und ohne merkbare weitere Uretdionbildung und kann anschliessend mit Bleikatalysatoren zum Polyurethan durch Hitzestoss vernetzt werden.

Setzt man den Katalysator (0,2% Bleioctoat) zu der Mischung aus Polyether und MDI-Dimer nach 1b), so bleibt die Mischung bei Raumtemperatur lagerstabil, nach 1-stündigem Erhitzen auf 120 °C tritt jedoch Reaktion ein unter Bildung des hochmolekularen Elastomeren (s. Beispiel 10).

Beispiel 9 (Vergleichsbeispiel)

Werden anstelle von 25 g MDI-Dimer (vgl. Beispiel 8) 18 g dimeres Toluylendiisocyanat verwendet und die Mischung danach auf 120 bis 140 °C erhitzt, so erfolgt rasche Vernetzung und man erhält ein nahezu transparentes wenn auch sehr weiches Polyurethan. Zwar reagiert diese Mischung bereits ohne Katalysator zu dem gleichen Polyurethan, doch zeigt die Lagerstabilitätsmessung bei 50 °C, dass auch schon bei dieser Temperatur unter kontinuierlicher Viskositätserhöhung innerhalb weniger Tage Vernetzung eintritt. Dieses Gemisch ist daher als nicht-lagerstabil zu bezeichnen.

Beispiel 10

Dem in Beispiel 8 genannten Reaktionsgemisch von MDI-Dimer in Polyether werden 0,2 g Pb-octoat zugesetzt.

Nach dem Entgasen im Vakuum wird die gut giessbare Suspension in eine mit Trennmittel vernetzte geeignete Form gegossen und diese ½ bis 1 Stunde bei 110 bis 120 °C ausgeheizt. Man erhält ein hochelastisches Elastomer mit folgenden mechanischen Eigenschaften:

| | DIN | |
|---|---|---|
| Härte (A) | 53 505 | 50–55 |
| Zugfestigkeit (M.Pa) | 53 504 | 3–4 |
| Bruchdehnung (%) | 53 504 | 100–150 |
| Weiterreissfestigkeit (KN/m) | 53 515 | 5–6 |
| Elastizität (%) | 53 512 | 55–60 |

Dieses Reaktionsgemisch ist bei Raumtemperatur lagerstabil, es erfolgt nach einer Beobachtungszeit von 8 Monaten keinerlei Viskositätserhöhung und kann danach aber durch Hitzestoss zu einem PU-Elastomer gehärtet werden.

Beispiel 11 (Vergleichsbeispiel)

Durch Zusatz von 0,1 g pB-octoat oder anderer in der PUR-Chemie gebräuchlicher Katalysatoren wie z.B. Zinn-(II)-ethylhexoat oder Diazabicyclooctan zu den in Beispiel 9 genannten Kombinationen aus Polyether und TT wird die Reaktivität der Mischung deutlich erhöht. Je nach Katalysator und Menge tritt auch bei Raumtemperatur bereits nach Stunden oder einigen Tagen Vernetzung zu verqualiten Produkten ein (nicht lagerstabile Einkomponenten-Reaktivmischung mit TT).

Beispiel 12

Eine Mischung von 2000 g (1,0 Mol) des in Beispiel 8 genannten Polypropylenglykolethers (OH-Zahl = 56) und 125 g (0,5 Mol) 4,4'-Diisocyanatodiphenylmethan wird so lange auf 70 bis 80 °C erwärmt, bis keine NCO-Gruppen mehr nachweisbar sind. 500 g von diesem OH-Prepolymeren werden nunmehr mit 62,5 g MDI-Dimer und 0,5 pb-octoat innig vermischt, der Ansatz in eine geeignete Form gegossen und diese 2 bis 3 Stunden bei 110 bis 120 °C ausgeheizt. Man erhält Elastomere mit untenstehenden mechanischen Eigenschaften:

| | |
|---|---|
| Härte (A) | 52 |
| Zugfestigkeit (M.Pa) | 3,5 |
| Bruchdehnung (%) | 125 |
| Weiterreissfestigkeit (KN/m) | 6,5 |
| Elastizität (%) | 54 |

Beispiel 13

Zu einer Lösung von 15 g Ethylenglykol in 500 g des in Beispiel 8 bechriebenen Polyethers wurden 230 g MDI-Dimer in feiner Form (10–20 μ) zugesetzt und intensiv vermischt. Nach Zugabe einer Kombination von 0,5 g Pb-octoat und 0,5 g eines Sn-Katalysators auf Basis Dioctylzinn-dithioalkylester (FOMREZ-UL 29, Fa. Witco) wird eine Probe 2 Stunden bei 120 °C ausgeheizt. Das entstehende Elastomer zeigt folgende mechanischen Eigenschaften:

| | |
|---|---|
| Härte (A) | 65 |
| Zugfestigkeit (M.Pa) | 7 |
| Bruchdehnung (%) | 220 |
| Weiterreissfestigkeit (KN/m) | 8 |
| Elastizität (%) | 55 |

Die rakelfähige Reaktionsmischung ist als Einkomponentensystem bei Raumtemperatur lagerstabil.

Beispiel 14

Einer Lösung von 12,5 g Ethylenglykol in 500 g Polytetrahydrofuran (OH-Zahl = 56, MG = 2000) wurden bei einer Temperatur von 50 bis 60 °C 212,5 g pulverisiertes MDI-Dimer und anschliessend 0,8 g eines Sn-Katalysators (FOMREZ-UL 29, Fa. Witco) zugesetzt. Nach dem Entgasen wird der Ansatz in eine entsprechende Form gegossen und bei 120 °C ausgeheizt (2 Stunden). Das entstehende Elastomer zeigt folgende Eigenschaften:

| | |
|---|---|
| Härte (A) | 88 |
| Zugfestigkeit (M.Pa) | 10,2 |
| Bruchdehnung (%) | 310 |
| Weiterreissfestigkeit (KN/m) | 20 |
| Elastizität (%) | 55 |

Die nicht ausgeheizte Reaktionsmischung ist bei Raumtemperatur in Form einer viskosen Paste lagerstabil.

Beispiel 15

500 g eines gemäss US-PS 3 304 273 oder DBP 1 152 536 durch in situ-Polymerisation von Styrol und Acrylnitril modifizierten linearen Polypropylenglykolethers des Molekulargewichts 2000 mit der OH-Zahl 37 wurden mit 100 g MDI-Dimer vermischt. Nach Zugabe von 1,25 g Bleinaphthenat wird die bei Raumtemperatur gut giessbare Mischung 2 Stunden bei 120 °C ausgeheizt. Man erhält einen hochelastischen Formkörper mit folgenden mechanischen Eigenschaften:

| | |
|---|---|
| Härte (A) | 74 |
| Zugfestigkeit (M.Pa) | 6,0 |
| Bruchdehnung (%) | 150 |
| Weiterreissfestigkeit (KN/m) | 10 |
| Elastizität (%) | 52 |

Diese giessbare Mischung bleibt beim Lagern stabil und kann andererseits zu einem beliebigen Zeitpunkt durch Hitzestoss zum Polyurethan gehärtet werden.

Beispiel 16

500 g eines linearen Polypropylenglykol vom MG = 2000 (OH-Zahl = 56) wurden mit den in Tabelle 1 angegebenen Mengen MDI-Dimer und aromatischem Diamin (Formeln A bis I/Tabelle 1) innig vermischt. Danach wurde 0,6 g Pb-octoat zugesetzt. Es erfolgte allmählicher Viskositätsanstieg, der nach 1 bis 2 Tagen bei Raumtemperatur das Maximum erreicht hat (in situ-Reaktion von MDI-Uretdion mit dem aromatischen Diamin zum modifizierten MDI-Uretdiondiisocyanat. Je nach Menge des Amins erhält man noch giessbare, rakelfähige, pastenartige oder feste Reaktionsmischungen, die eine Lagerstabilität bei Raumtemperatur von mindestens ½ Jahr aufweisen. Die Mischungen können zu einem beliebigen Zeitpunkt durch Hitzestoss gehärtet werden, wobei die Verarbeitungstechnik von der Konsistenz der Einkomponentensysteme abhängt.

Wird das MDI-Uretdiondiisocyanat dagegen durch den entsprechenden Anteil des dimerisierten Toluylendiisocyanats ausgetauscht, so zeigen diese Systeme keine Lagerstabilität, selbst nicht bei Raumtemperatur. Bereits nach wenigen Stunden oder Tagen tritt Verquallung oder Vernetzung ein.

Tabelle 1

| | Aromatische Diamine | Menge (g) | MDI-dimer (g) | Bemerkung |
|---|---|---|---|---|
| A | 2,4-/2,6-Diamino-3,5-diethyltoluol (80/20-Mischung) | 5 | 38 | bei Raumtemperatur giessbar |
| B | 2,4-/2,6-Diamino-3,5-diethyltoluol (80/20-Mischung) | 10 | 50 | stark thixotrop, unter Formgebung zu verarbeiten |
| C | 2,4-/2,6-Diamino-3,5-diethyltoluol (80/20-Mischung) | 15 | 64 | stark thixotrop, unter Formgebung zu verarbeiten |
| D | 2,4-/2,6-Diamino-3,5-diethyltoluol (80/20-Mischung) | 20 | 78 | stark thixotrop, unter Formgebung zu verarbeiten |
| E | 4,4'-Diamino-3,5-Diethyl-3',5'-diisopropyldiphenylmethan | 10 | 34 | giessbar |
| F | 4,4'-Diamino-3,5-Diethyl-3',5'-diisopropyldiphenylmethan | 15 | 44 | rakelfähig |
| G | 2,4-Diaminotoluol | 2,0 | 34 | giessbar |
| H | 4,4'-Diamino-diphenylmethan | 6,0 | 40 | giessbar rakelfähig |
| I | 1,5-Diamino-naphthalin | 4,0 | 30 | giessbar |

In Tabelle 2 werden die Ausheizbedingungen und die mechanischen Eigenschaften der entstandenen Elastomere angegeben.

Tabelle 2

| System | Ausheiz-bedingungen | Härte (Shore A) D | Zugfestig-keit (m.Pa) | Bruch-dehnung (%) | Weiter-reiss-festigkeit (KN/m) | Elasti-zität (%) |
|---|---|---|---|---|---|---|
| A | 2 h/120 °C | 70 | 8,0 | 300 | 13 | 52 |
| B | 20 min/120 °C 100 bar | 85 | 10,5 | 330 | 18,5 | 46 |
| C | 20 min/120 °C 100 bar | 95/40 D | 15,0 | 200 | 25 | 44 |
| D | 20 min/120 °C 100 bar | 98/45 | 15,0 | 150 | 30 | 40 |
| E | 2 h/120 °C | 67 | 8,0 | 300 | 13 | 45 |
| F | 3 h/120 °C | 82 | 12,0 | 350 | 24 | 43 |
| G | 3 h/120 °C | 57 | 5,5 | 285 | 9 | 47 |
| H | 3 h/120 °C | 72 | 9,5 | 350 | 15 | 45 |
| E | 3 h/120 °C | 60 | 6,5 | 250 | 14 | 42 |

Beispiel 17

500 g des in Beispiel 16 C beschriebenen Reaktionsansatzes werden gleichmässig auf eine steife Polyethylenfolie aufgerakelt. In diese plastische Mischung wurden nun 100 g Glasfasern der durchschnittlichen Länge von 20 bis 26 mm eingedrückt und mittels einer Walze die noch enthaltende Luft abgepresst. Danach lässt man dieses Rohfell einen Tag lagern, wonach die Vorreaktion Amin/MDI-Dimer zum modifizierten Uretdiondiisocyanat zu einer steifen Paste beendet ist. Dieses Rohfell kann nun zu einem beliebigen Zeitpunkt und Druck (50 bis 100 bar) und Formgebung bei 120 °C (5 bis 15 Minuten) verpresst und gehärtet werden. Man erhält ein hochelastisches, steifes, mit Glasfasern gefülltes Polyurethan.

Beispiel 18

a) Separate Herstellung eines modifizierten MDI-Uretdiondiisocyanats (B/2)

Zu einer Suspension von 192 g MDI-Dimer (n = 0,1) in 500 g Toluol werden bei Raumtemperatur 25 g einer Diaminmischung aus 2,4-Diamino-3,5-diethyltoluol und 2,6-Diamino-3,5-diethyltoluol (ca. 80/20) zugesetzt und nach kurzem Rühren 1 Stunde auf 50 °C erwärmt. Danach wird das aus MDI-Dimer und Diamin entstandene NCO-Voraddukt abgesaugt und toluolfrei gewaschen. Der NCO-Gehalt beträgt 11% (NCO ber.: 10,6%), d.h. es erfolgte glatte Umsetzung des Diamins mit MDI-Dimer. Der Uretdionring wurde dabei nicht gespalten.

Werden 217 g obigen, harnstoffhaltigen, modifizierten MDI-Uretdiondiisocyanats nunmehr mit 500 g eines linearen Polypropylenglykolethers mit der OH-Zahl 56 (MG 2000) innig vermischt, so erfolgt nach Zusatz von 0,5 g Pb-octoat und Ausheizen bei 110 bis 120 °C (1 bis 2 Stunden) eine Hitzevernetzung. Man erhält ein PUR-Elastomer mit ähnlichen mechanischen Eigenschaften wie in Beispiel 16 unter A beschrieben wurde.

Beispiel 19

300 g der in Beispiel 2 beschriebenen Suspension wurden mit 18 g 2,4-/2,6-Diamino-3,5-diethyltoluol und 0,4 g Pb-octoat vermischt. Nach einigen Stunden erfolgt Aufdickung zu einer noch verarbeitbaren und bei Raumtemperatur lagerstabilen Paste. Die auf festen Unterlagen aufgetragene Paste kann dann zu einem beliebigen Zeitpunkt durch Hitzestoss (120 °C/½–1 h) zu einem hochelastischen Film ausgehärtet werden.

Beispiel 20

500 g eines linearen Polypropylenglykolethers mit der OH-Zahl 28 (MG 4000) wurden mit 105 g MDI-Dimer, 30 g 4,4′-Diamino-3,5-diethyl-3′,5′-diisopropyl-diphenylmethan und 0,5 g Pb-octoat bei Raumtemperatur vermischt. Es erfolgt alsbald Viskositätsanstieg durch Vorreaktion des Diamins mit MDI-Dimer (Modifizierungsreaktion im Polyol). Die Reaktionsmischung ist jedoch auch noch nach einem Tag giessbar und hält sich ab dieser Zeit in unveränderter Konsistenz. Nach dem Ausheizen bei 110 °C erhält man ein PUR-Material mit folgenden mechanischen Eigenschaften:

| | |
|---|---|
| Härte (A) | 52 |
| Zugfestigkeit (M.Pa) | 6,0 |
| Bruchdehnung (%) | 850 |
| Weiterreissfestigkeit (KN/m) | 16 |
| Elastizität (%) | 40 |

Beispiel 21

(Zusatz eines füllstoffartigen Polyaddukts E)

50 g eines aus 1 Mol 1,6-Diisocyanatohexan und 1 Mol 1,6-Diaminohexan in Toluol hergestellten feinteiligen Polyharnstoffes werden in 500 g des in Beispiel 8 genannten linearen Polypropylenglykolethers suspendiert und danach wird dieser Mischung 128 g MDI-Dimer und 0,5 g Pb-octoat zugesetzt. Nach 3-stündigem Ausheizen bei 110 bis 120 °C erhält man einen elastischen Formkörper mit den in Tabelle 3 angegebenen mechanischen Werten.

Beispiel 22

(Zusatz eines füllstoffartigen Polyadduktes E)

69 g eines aus 1 Mol Isophorondiisocyanat und 1 Mol Isophorondiamin in Toluol hergestellten Polyharnstoffs wurden in 500 g des obigen Polyethers suspendiert. Nach Zugabe von 125 g MDI-Dimer und 0,5 g Pb-octoat wird diese Mischung wie in Beispiel 21 verarbeitet und ausgeheizt (mechanische Eigenschaften vgl. Tabelle 3).

Beispiel 23

(Zusatz eines füllstoffartigen Polyadduktes E)

Zu einer Lösung von 28 g 4,4′-Diamino-diphenylmethan in 500 g des in Beispiel 8 genannten Polyethers wird eine Lösung von 35 g 4,4′-Diisocyanatodiphenylmethan innerhalb von 50 bis 60 Minuten bei Raumtemperatur zugetropft. Zu der entstandenen Suspension des Polyharnstoffes in Polyether werden 125 g MDI-Dimer und 0,5 g Pb-octoat zugesetzt.

Beispiel 24

Der Anteil des Polyharnstoffes wurde erhöht, indem unter die in Beispiel 23 erwähnten Bedingungen 56 g 4,4′-Diaminodiphenylmethan mit 70 g 4,4′-Diisocyanatodiphenylmethan zur Reaktion gebracht wurde. Zu der stark thixotropen Suspension wurden 128 g MDI-Dimer und 0,5 g Pb-octoat zugesetzt.

Beispiel 25

In analoger Weise wurden in 500 g des Polyethers ein gemischter Polyharnstoff aus 25 g 2,4-/2,6-Diamino-3,5-diethyltoluol (80/20-Mischung) und 35 g 4,4′-Diisocyanatodiphenylmethan hergestellt. Auch diese Suspension verhält sich stark thixotrop. Unter starkem Rühren können jedoch noch 128 g MDI-Dimer und 0,5 g Pb-octoat eingemischt werden.

Beispiel 26

Zu einer in situ hergestellten Suspension eines Polyharnstoffs aus 17 g 2,4-Diaminotoluol und 24 g

2,4-Diisocyanatotoluol in 500 g Polyether wurden 128 g MDI-Dimer und 0,5 g Pb-octoat zugesetzt.

Beispiel 27

Der Anteil des Polyharnstoffes wurde erhöht, indem 34 g 2,4-Diaminotoluol und 48 g 2,4-Diisocyanatotoluol in Gegenwart von 500 g Polyether zur Reaktion gebracht wurden. Die Suspension zeigt bei Raumtemperatur eine Viskosität von 4000 mPa.s. Dieser Mischung wurden 125 g MDI-Dimer und 0,5 g Pb-octoat zugesetzt.

Die in den Beispielen 21 bis 27 beschriebenen Kombinationen aus Polyethern, MDI-Dimer und Polyharnstoffen sind bei Raumtemperatur lagerstabil, d.h. es tritt keine Viskositätserhöhung ein. Erst nach 4- bis 6-stündigem Ausheizen bei 110 bis 120 °C erfolgt Aushärtung und man erhält hochelastische PUR-Elatomere mit den folgenden Eigenschaften (Tabelle 3):

Tabelle 3

| | Beispiele 21 | 22 | 23 | 24 | 25 | 26 | 27 |
|---|---|---|---|---|---|---|---|
| Härte (Shore A) | 65 | 64 | 71 | 81 | 71 | 62 | 70 |
| Zugfestigkeit (M.Pa) | 5,0 | 4,5 | 4,0 | 6,0 | 4,0 | 3,5 | 4,5 |
| Bruchdehnung (%) | 125 | 130 | 120 | 120 | 100 | 100 | 125 |
| Elastizität (%) | 60 | 58 | 60 | 60 | 58 | 60 | 61 |
| Weiterreissfestigkeit (KN/m) | 7,5 | 6,5 | 7,5 | 10,5 | 10,0 | 7,0 | 8,0 |

Beispiel 28

500 g eines unverzweigten Polyesters aus Adipinsäure und einem Ethylenglykol- und Butandiol-(1,4) (1:1)-Gemisch mit der OH-Zahl 56 wurden bei 50 bis 60 °C mit 157,5 g MDI-Dimer, 11,5 g 2,4-/2,6-Diamino-3,5-diethyltoluol und 1,25 g FOMREZ-U 29 (S-haltiger Zinn-Katalysator der Fa. Witco) innig verrührt. Nach dem Erkalten erhält man das lagerstabile Einkomponentensystem in Form einer hochviskosen Paste. Zu einem beliebigen Zeitpunkt kann diese Paste in der Hitze (120 °C) und unter Druck (50 bis 100 bar) und Formgebung gehärtet werden. Nach einer Ausheizzeit von 10 bis 20 Minuten erhält man ein Elastomer mit folgenden Eigenschaften:

| | |
|---|---|
| Härte (Shore A) | 83 |
| Zugfestigkeit (M.Pa) | 15 |
| Bruchdehnung (%) | 500 |
| Weiterreissfestigkeit (KN/m( | 40 |
| Elastizität (%) | 52 |

Beispiel 29

500 g des in Beispiel 28 genannten Polyesters wurden mit 125 g MDI-Dimer innig vermischt. Nach Zugabe untenstehender Katalysatoren (1,25 g) wird das viskose Material in geeignete Formen gefüllt und 4 Stunden bei 120 °C ausgeheizt. Wie die folgende Tabelle 4 zeigt, wurden je nach Wirksamkeit der verschiedenen Katalysatoren deutliche Unterschiede der mechanischen Eigenschaften der vernetzten Produkte beobachtet.

Tabelle 4

| | Härte (Schore A) | Zugfestigkeit (M.Pa) | Bruchdehnung (%) | Weiterreissfestigkeit (KN/m) | Elastizität (%) |
|---|---|---|---|---|---|
| FORMREZ UL 6 (Fa. Witco) | 71 | 12,0 | 800 | 33 | 57 |
| | (Dibutylzinn-IV-di-(thioester)) | | | | |
| FORMREZ UL 24 | 72 | 10,5 | 680 | 26 | 57 |
| | (Dimethylzinn-IV-di-(thioester)) | | | | |
| FORMREZ UL 29 | 75 | 15,0 | 740 | 30 | 57 |
| | (Dioctylzinn-IV-di-(thioester)) | | | | |
| Pb-Octoat | 63 | 6,0 | 400 | 11,5 | 55 |
| Dabco/1,4-Diazabicyclo-(2,2,2)-octan | 60 | 5,0 | 460 | 11,0 | 55 |

Deutlich weniger günstig erweisen sich im Fall von Polyesterpolyolen Pb-octoat und Dabco als Katalysatoren gegenüber Zinnkatalysatoren.

Beispiel 30

500 g eines Polycaprolactons mit der OH-Zahl = 56 (MG = 2000) wurden in der Wärme (40 bis

60 °C) mit 12,5 g Ethylenglykol, 1,25 g FOMREZ UL 29 und 222,5 g MDI-Dimer vermischt. Nach kurzer Entgasungszeit kann die noch fliessbare Reaktionsmischung in eine Form gegossen werden, die dann bei 110 bis 120 °C ausgeheizt wird. Nach 4 Stunden Ausheizzeit wird ein Elastomer mit folgenden Eigenschaften erhalten:

| | |
|---|---|
| Härte (A) | 88 |
| Zugfestigkeit (M.Pa) | 18,5 |
| Bruchdehnung (%) | 500 |
| Weiterreissfestigkeit (KN/m) | 40 |
| Elastizität (%) | 55 |

Bei Raumtemperatur erstarrt dieses Reaktionsgemisch zu einem wachsartigen Einkomponentensystem (Erweichungsbereich ca. 55 bis 60 °C), das nunmehr unter Druck und Formgebung in der Hitze verarbeitet werden muss. Auch nach einer 3-monatigen Lagerung erhält man nach dem Verpressen einen hochelastischen Formkörper.

Beispiel 31

Ersetzt man das in Beispiel 30 genannte Polycaprolacton durch 500 g eines Polyesters aus Adipinsäure und Butandiol-(1,4) (OH-Zahl = 56, MG = 2000), so erhält man bei gleicher Rezeptur und Verarbeitungsbedingungen folgende PUR-Elastomere:

| | |
|---|---|
| Härte (A) | 91,0 |
| Zugfestigkeit (M.Pa) | 20,5 |
| Bruchdehnung (%) | 530 |
| Weiterreissfestigkeit (KN/m) | 57 |
| Elastizität (%) | 52 |

Auch diese Mischung erstarrt bei Raumtemperatur zu einem wachsartigen Einkomponentensystem, das sich über einen Beobachtungszeitraum von 3 Monaten unverändert verhält.

Beispiel 32

500 g eines festen Polyesters aus Adipinsäure und Ethylenglykol mit der OH-Zahl 56 (MG = 2000) wurden in der Wärme (50 bis 70 °C) mit 125 g MDI-Dimer und 1,25 g FOMREZ UL 29 (Fa. Witco) vermischt. Nach kurzem Entgasen wird dieses Gemisch auf eine Unterlage gegossen. Nach dem Abkühlen lässt sich das feste Einkomponentensystem granulieren. Zu einem beliebigen Zeitpunkt können diese Granulate in einer auf 70 bis 100 °C heisse Form eingebracht werden. Nach dem Aufschmelzen (60 bis 80 °C) verteilt sich die nunmehr dickflüssige Schmelze in der Form, wobei der Fliessweg von der Formtemperatur bestimmt wird. Die Endaushärtung erfolgt schliesslich bei einer Temperatur von 140 bis 120 °C. Das erhaltene Elastomer zeigt folgende mechanischen Eigenschaften:

| | |
|---|---|
| Härte (A) | 85 |
| Zugfestigkeit (M.Pa) | 18,0 |
| Bruchdehnung (%) | 700 |
| Weiterreissfestigkeit (KN/m) | 28 |
| Elastizität (%) | 48 |

Beispiel 33 (feinzelliges Elastomeres)

260 g des in Beispiel 16 B beschriebenen Gemisches werden mit 25 g Petrolether innig vermischt und in eine $20 \times 20 \times 1\ cm^3$ grosse, auf Raumtemperatur abgekühlte Metallform eingetragen. Diese Form wird mit einem Druck von 160 $kg/cm^2$ geschlossen und auf 110 °C erhitzt. Nach 20 Minuten wird die Form wieder auf Raumtemperatur abgekühlt. Man erhält ein feinzelliges, elastisches Formteil mit einem Raumgewicht von ca. 700 $kg/m^3$.

Beispiel 34a) + b)

Zu einer Dispersion von 150 g MDI-Dimer in 500 g eines verzweigten Polypropylenglykolethers mit der OH-Zahl = 35 werden mit 25 g 2,4-/2,6-Diamino-3,5-diethyltoluol, 20 g Azobisisobutyronitril bzw. 20 g N,N'-Dimethyl-N,N'-dinitroso-terephthalamid und 1,25 g Pb-octoat zugesetzt. Diese Reaktionsgemische werden mittels einer Rakel gleichmässig auf eine feste Unterlage aufgetragen und bei 120 bis 140 °C ausgehärtet. Man erhält nach dem Ausheizen (1 bis 2 Stunden) hochelastische geschäumte Flächengebilde, die sich insbesondere als Beschichtungsmaterial beliebiger Substrate eignen.

Beispiel 35 (Vergleichsversuch entsprechend GB-PS 1 134 285)

Zu einer Mischung von 500 ml $H_2O$, 5 g Tributylphosphin und 10 g eines Emulgators (Mersolat ® H, Bayer AG) werden innerhalb von 1,5 Stunden 500 g geschmolzenes Diphenylmethandiisocyanat zugetropft. Unter Aufschäumen der Reaktionsmischung scheidet sich nach kurzer Zeit ein weisser Niederschlag ab. Nach 3 bis 4 Stunden werden infolge $MDI/H_2O$-Reaktion ca. 24 l $CO_2$ entwickelt. Nach Absaugen und Waschen des Niederschlages in Aceton erhält man das Harnstoffgruppen enthaltende MDI-Uretdiondiisocyanat in Form eines weissen, unlöslichen Pulvers. Der über die Aminaufnahme berechnete NCO-Gehalt beträgt 6,5%. Ein gemäss Beispiel 10 durchgeführter Testversuch bleibt unvernetzt und flüssig. Derartige Harnstoffgruppen enthaltende, hochmolekulare MDI-Uretdionderivate sind für die erfindungsgemässen Anwendungen nicht geeignet.

Beispiel 36

300 g eines linearen OH-Gruppen enthaltenden Polybutadien (Molekulargewicht 2000, OH-Zahl 56; Telechelic R 45 HT der Fa. ARCO) werden mit 125 g dimerem Diphenylmethandiisocyanat (n = 0) innig vermischt. Nach Zugabe von 0,7 g eines Katalysators (FOMREZ UL 29) wird im Vakuum entgast und der Reaktionsansatz in eine mit Trennmittel versehene Form gegossen. Nach 2-stündigem Ausheizen bei 120 °C erhält man einen elastischen Formkörper mit folgenden Eigenschaften:

| | |
|---|---|
| Härte (Shore A) | 57 |
| Zugfestigkeit (M.Pa) | 3,2 |
| Weiterreissfestigkeit (KN/m) | 5,5 |
| Bruchdehnung (%) | 155 |
| Elastizität (%) | 45 |

Bei Raumtemperatur ist dagegen der Einkomponenten-Reaktivansatz über mehrere Monate lagerstabil.

Beispiel 37

58 g einer 50%igen Suspension von oligomerem Diphenylmethanuretdiondiisocyanat (n = 0,35) in Dioctylphthalat werden mit 100 g eines linearen Polypropylenglykolethers (Molekulargewicht 2000), 1 g 2,4-/2,6-Diamino-3,5-diethyltoluol (80/20) und 0,2 g Bleioctoat vermischt. Nach dem Entgasen im Vakuum wird der Reaktionsansatz in eine eingewachste Form gegossen und 2 Stunden bei 110 bis 120 °C ausgeheizt. Man erhält ein weiches Polyurethanelastomeres mit einer Shore A-Härte von 40 und einer Elastizität von 35%.

Beispiel 38

60 g eines Diphenylmethanuretdiondiisocyanats mit einem NCO-Gehalt von 15,1% (n = 1,1) werden mit 40 g eines hochmolekularen Diphenylmethanuretdions mit einem NCO-Gehalt von 4,7%, n = 3,6 – ausserhalb der erfindungsgemässen Grenzen – vermischt. Von dieser Mischung werden 46 g zu 100 g eines linearen Polypropylenglykolethers vom Molekulargewicht 2000 zugesetzt. Hierbei wird nur der freie NCO-Gehalt des Oligodimeren mit n = 1,1 zur Berechnung der Äquivalenz gegenüber den OH-Gruppen des Polyethers berücksichtigt. Die höhermolekularen Anteile (n = 3,6) wirken dabei im wesentlichen als Füllstoff, der etwas zur Steifigkeit des Polyurethanelastomeren beiträgt. Nach Zugabe von 0,2 g Blei-octoat und nach Entgasen der Mischung bei Raumtemperatur wird der Ansatz in eine geeignete Form gegossen. Nach Ausheizen bei 110 bis 120 °C/2 bis 4 h, erhält man ein Polyurethanelastomeres mit einer Shore A-Härte von 65.

**Patentansprüche**

1. Langzeit-lagerbeständige, niedermolekulare, im wesentlichen wasserfreie, fliessfähige, pastenartige oder leicht aufschmelzbare, heterogene, durch Hitzeeinwirkung zu Polyurethanen härtbare Einkomponentensysteme auf Basis von Polyhydroxylverbindungen, hochschmelzenden Diisocyanat-Dimeren und gegebenenfalls Katalysatoren, dadurch gekennzeichnet, dass sie enthalten:

A) 1 OH-Äquivalent von zwei- oder mehrwertigen, höhermolekularen Polyhydroxylverbindungen mit einem Molekulargewicht von 1000 bis 10 000,

B) m.(1 bis 1,5) + (0,8 bis 1,5) NCO-Äquivalente

1) von 4,4'-Diphenylmethan-uretdion-diisocyanaten

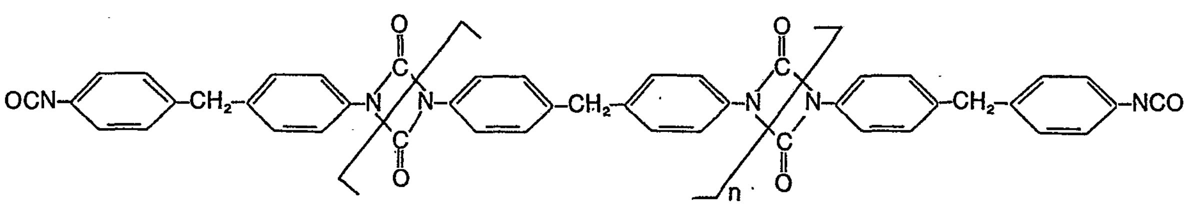

n = 0 bis 2,5,
m = 0,
oder

2) von entweder
in situ in der Suspension in A) oder vorher separat aus B)/1) und zwei- oder mehrfunktionellen, niedermolekularen Verbindungen mit an aliphatische und/oder cycloaliphatische Gruppen gebundenen OH-Gruppen und/oder aromatischen $NH_2$-Gruppen und Molekulargewichten von 62 bis 400 hergestellten, modifizierten 4,4'-Diphenylmethanuretdiondiisocyanaten,
wobei m Werte von 0 bis 7 aufweist und zur Modifizierung m OH- und/oder $NH_2$-Äquivalente dieser zwei- oder mehrfunktionellen, niedermolekularen Verbindungen mit an aliphatische und/oder cycloaliphatische Gruppen gebundenen OH-Gruppen und/oder aromatischen $NH_2$-Gruppen und Molekulargewichten von 62 bis 400
mit m.(1 bis 1,5) + (0,8 bis 1,5) NCO-Äquivalenten von B)/1 umgesetzt sind,
in feinpulverisierter Form mit einer mittleren Teilchengrösse von 1 bis 70 µm,

C) 0,001 bis 5 Gew.-%, bezogen auf A) + B) eines Blei- und/oder Zinnkatalysators, gegebenenfalls zusammen mit weiteren, üblichen Polyurethankatalysatoren, gegebenenfalls

D) 0 bis 25 Gew.-% (bezogen auf die Gesamtmischung) füllstoffartige, feinteilige Polyaddukte mit einer mittleren Teilchengrösse von 1 bis 70 µm aus Polyisocyanaten und mindestens einer, gegenüber NCO-Gruppen zwei oder mehrere reaktive Gruppen aufweisenden, relativ niedermolekularen Verbindung des Molekulargewichts 32 bis 400, und gegebenenfalls

E) weiteren Hilfs- und Zusatzstoffen, wie sie in der Polyurethanchemie üblich sind.

2. Langzeit-lagerbeständige Einkomponentensysteme nach Anspruch 1, dadurch gekennzeichnet, dass sie enthalten

A) ein OH-Äquivalent von zwei- oder mehrwertigen, höhermolekularen Polyethern oder Polyestern des Molekulargewichtes 1250 bis 6000,

B) m.(1 bis 1,5) + (0,8 bis 1,5) NCO-Äquivalente

1) von 4,4'-Diphenylmethanuretdiondiisocyanaten mit n = 0,1 bis 1,5 und m = 0 oder

2) von durch
an aliphatische und/oder cycloaliphatische Gruppen gebundene Diole und/oder aromatische Diamine mit Molekulargewichten von 62 bis 400 modifizierten 4,4'-Diphenylmethanuretdiondiisocyanaten mit n = 0,1 bis 1,5, wobei m Werte von grösser 0 bis 7 aufweist,

C) 0,01 bis 2 Gew.-% Blei- und Zinnkatalysatoren, gegebenenfalls zusammen mit weiteren Polyurethankatalysatoren,
gegebenenfalls

D) 2,5 bis 12,5 Gew.-% füllstoffartige, feinteilige Polyaddukte aus Diisocyanaten und Diaminen, Hydrazin, Dihydrazidverbindungen und Diole mit Molekulargewichten zwischen 32 und 400, und
gegebenenfalls

E) üblichen Hilfs- und Zusatzstoffen.

3. Langzeit-lagerbeständige Einkomponentensysteme nach Ansprüchen 1 und 2, dadurch gekennzeichnet, dass sie als A) Polyetherpolyole und als C) 0,01 bis 2 Gew.-% Bleisalze als Katalysatoren, gegebenenfalls zusätzlich Tertiäraminkatalysatoren enthalten.

4. Langzeit-lagerbeständige Einkomponentensysteme nach Ansprüchen 1 bis 2, dadurch gekennzeichnet, dass sie als A) Polyesterpolyole und als C) 0,01 bis 2 Gew.-% an Zinnsalzen als Katalysatoren, gegebenenfalls zusätzlich Tertiäraminkatalysatoren, enthalten.

5. Verfahren zur Herstellung von Langzeitlagerbeständigen Einkomponentensystemen nach Ansprüchen 1 bis 4, aus Polyhydroxylverbindungen, hochschmelzenden Diisocyanat-Dimeren und gegebenenfalls Katalysatoren, dadurch gekennzeichnet, dass man

A) 1 Äquivalent von zwei- oder mehrwertigen, höhermolekularen Polyhydroxylverbindungen mit einem Molekulargewicht zwischen 1000 und 10 000, mit

B) m.(1 bis 1,5) + (0,8 bis 1,5) NCO-Äquivalenten

1) von 4,4′-Diphenylmethan-uretdion-diisocyanaten

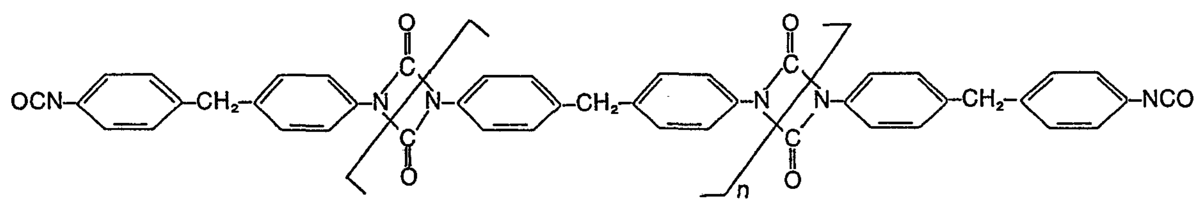

n = 0 bis 2,5, oder

2) von entweder in situ in Dispersion A) oder vorher extern aus B)/1 und einer zwei- oder mehrfunktionellen, niedermolekularen Verbindung mit an aliphatische und/oder cycloaliphatische Reste gebundenen OH-Gruppen und/oder aromatisch gebundenen $NH_2$-Gruppen und einem Molekulargewicht zwischen 62 und 400 hergestellten, modifizierten 4,4′-Diphenylmethan-uretdiondiisocyanaten,
wobei m Werte von grösser 0 bis 7 aufweist und zur Modifikation von m OH- und/oder $NH_2$-Äquivalenten dieser zwei- oder mehrfunktionellen, niedermolekularen Verbindungen mit an aliphatische und/oder cycloaliphatische Gruppen gebundenen OH-Gruppen und/oder aromatischen $NH_2$-Gruppen und Molekulargewichten von 62 bis 400 mit m.(1 bis 1,5) + (0,8 bis 1,5) NCO-Äquivalenten von B)/1 umgesetzt sind,
in feinpulverisierter, eine mittlere Korngrösse von 1 bis 70 µm aufweisender Form,

C) 0,001 bis 5 Gew.-%, bezogen auf A) + B) eines Blei- und/oder Zinnkatalysators, gegebenenfalls zusammen mit weiteren, üblichen Polyurethankatalysatoren, gegebenenfalls

D) 0 bis 25 Gew.-%, bezogen auf die Gesamtmischung, eines füllstoffartigen, feinteiligen Polyaddukts aus Polyisocyanaten und mindestens einer, gegenüber NCO-Gruppen zwei oder mehrere reaktive Gruppen aufweisenden, relativ niedermolekularen Verbindung des Molekulargewichts 32 bis 400 und gegebenenfalls

E) weiteren Hilfs- und Zusatzstoffen, wie sie in der Polyurethanchemie üblich sind, vermischt.

6. Verfahren nach Anspruch 5, dadurch gekennzeichnet, dass man

A) ein 2 bis 4 OH-Gruppen aufweisende höhermolekulare Polyhydroxylverbindung mit einem Molekulargewicht von 1250 bis 6000 mit

B) m.(1 bis 1,5) + (0,8 bis 1,5) NCO-Äquivalenten

1) von 4,4′-Diphenylmethan-uretdion-diisocyanaten mit n = 0,1 bis 1,5 und m = 0 oder

2) von in situ durch Dispersion von B)/1 in A) durch m Äquivalente eines
an aliphatische und/oder cycloaliphatische Reste gebundenen Diols und/oder aromatischen Diamins mit Molekulargewichten von 62 bis 400 modifizierten Diphenylmethan-uretdion-diisocyanates (wobei m Werte von grösser 0 bis 7 aufweist) und zur Modifikation m OM- und/oder $NH_2$-Äquivalente mit m.(1 bis 1,5) + (0,8 bis 1,5) NCO-Äquivalenten von 4,4′-Diphenylmethan-uretdion-diisocyanaten B)/1 umgesetzt sind,

C) 0,01 bis 2 Gew.-%, bezogen auf A) + B) an Blei- und Zinnkatalysatoren, gegebenenfalls in Mischung mit weiteren üblichen Polyurethankatalysatoren, neben gegebenenfalls

D) 2,5 bis 12,5 Gew.-% an füllstoffartigen Polyaddukten aus Diisocyanaten und Diaminen, Hydrazin, Dihydrazidverbindungen und Diolen mit Molekulargewichten zwischen 32 und 400, neben gegebenenfalls

E) üblichen Zusatz- und Hilfsstoffen
verwendet.

7. Verfahren nach Ansprüchen 5 und 6, dadurch gekennzeichnet, dass man als B) m.(1 bis 1,5) + (0,8 bis 1,5) NCO-Äquivalente von durch externe Umsetzung von m Äquivalenten eines an aliphatische und/oder cycloaliphatische Gruppen gebundenen niedermolekularen Diols und/oder aromatischen Diamins mit Molekulargewichten von 62 bis 400 mit m.(1 bis 1,5) + (0,8 bis 1,5) NCO-Äquivalenten von 4,4′-Diphenylmethan-uretdion-diisocyanaten B)/1 mit n = 0,1 bis 1,5, wobei m Werte grösser als 0 bis 7 aufweist, modifizierten Diphenylmethanuretdiondiisocyanates B)/2 verwendet.

8. Verfahren nach Ansprüchen 5 bis 7, dadurch gekennzeichnet, dass man als A) 2- bis 4-wertige Polyetherpolyole und als C) Bleisalze, gegebenenfalls zusammen mit weiteren üblichen PU-Katalysatoren auf Tertiäramin-Basis verwendet.

9. Verfahren nach Ansprüchen 5 bis 7, dadurch gekennzeichnet, dass man als A) 2- bis 4-wertige Polyesterpolyole mit einem Schmelzpunkt oberhalb Raumtemperatur verwendet und als C) Zinnkatalysatoren, gegebenenfalls zusammen mit weiteren üblichen PU-Katalysatoren auf Basis tertiärer Amine bei Temperaturen oberhalb des Schmelzpunktes der Polyesterpolole vermischt und die lagerstabilen Einkomponentensysteme nach Abkühlen auf Raumtemperatur granuliert.

10. Verwendung der langzeitlagerstabilen Einkomponentensysteme nach Ansprüchen 1 bis 9 zur Herstellung von hitzehärtbaren Polyurethankunststoffen durch Erhitzen auf Temperaturen von oberhalb 100 °C.

**Claims**

1. Low molecular weight, substantially waterfree, flowable, paste-like or readily fusible, heterogeneous one-component systems which are based on polyhydroxyl compounds, high-melting diisocyanate dimers and optionally catalysts, can be cured to form polyurethanes by the effect of heat and are stable under storage for long periods of time, characterised in that they contain:

A) 1 OH equivalent of di- or polyfunctional, relatively high molecular weight polyhydroxyl compounds having a molecular weight of 1,000 to 10,000,

B) m.(1 to 1.5) + (0.8 to 1.5) NCO equivalents

1) of 4,4′-diphenylmethane-uretdione diisocyanates

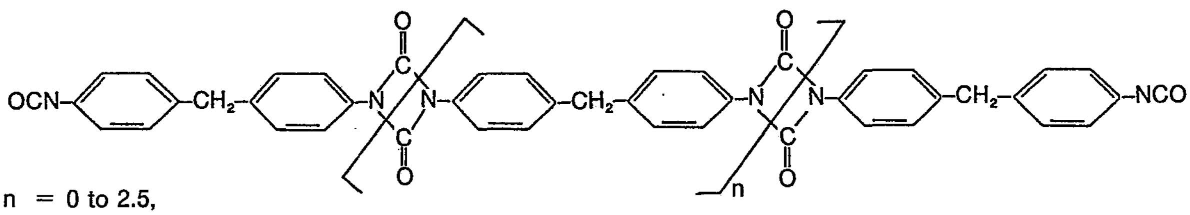

n = 0 to 2.5,
m = 0,
or

2) of modified 4,4′-diphenylmethane-uretdione diisocyanates prepared either in situ in the suspension in A) or beforehand separately from B)/1 and di- or polyfunctional, low molecular weight compounds containing OH groups bonded to aliphatic and/or cycloaliphatic groups, and/or aromatic $NH_2$ groups and having molecular weights of 62 to 400,

wherein m has values from 0 to 7 and, for the modification, m OH and/or $NH_2$ equivalents of these di- or polyfunctional, low molecular weight compounds containing OH groups bonded to aliphatic and/or cycloaliphatic groups, and/or aromatic $NH_2$ groups and having molecular weights of 62 to 400 are reacted with m.(1 to 1.5) + (0.8 to 1.5) NCO equivalents of B)/1,

in a finely pulverised form with an average particle size of 1 to 70 μm,

C) 0.001 to 5% by weight, based on A) + B) of a lead and/or tin catalyst, optionally together with other customary polyurethane catalysts, optionally

D) 0 to 25% by weight (based on the total mixture) of filler-like, finely divided polyadducts having an average particle size of 1 to 70 μm and obtained from polyisocyanates and at least one relatively low molecular weight compound having a molecular weight of 32 to 400 and containing two or more reactive groups towards NCO groups, and optionally

E) other auxiliaries and additives of the kind customary in polyurethane chemistry.

2. One-component systems according to Claim 1 which are stable under storage for long periods of time, characterised in that they contain

A) one OH equivalent of di- or polyfunctional relatively high molecular weight polyethers or polyesters with a molecular weight of 1,250 to 6,000,

B) m.(1 to 1.5) + (0.8 to 1.5) NCO equivalents

1) of 4,4′-diphenylmethane-uretdione diisocyanates in which n = 0.1 to 1.5 and m = 0 or

2) if 4,4′-diphenylmethane-uretdione diisocyanates in which n = 0.1 to 1.5 and which are modified by diols bonded to aliphatic and/or cycloaliphatic groups and/or aromatic diamines with molecular weights of 62 to 400, m having values of greater than 0 to 7,

C) 0.01 to 2% by weight of lead and tin catalysts, optionally together with other polyurethane catalysts,

optionally

D) 2.5 to 12.5% by weight of filler-like, finely-divided polyadducts of diisocyanates and diamines, hydrazine, dihydrazide compounds and diols with molecular weights between 32 and 400, and optionally

E) customary auxiliaries and additives.

3. One-component systems according to Claims 1 and 2, which are stable under storage for long periods of time, characterised in that they contain, as A), polyether polyols and, as C), 0.01 to 2% by weight of lead salts as catalysts, and optionally, in addition, tertiary amine catalysts.

4. One-component systems according to Claims 1 to 2 which are stable under storage for long periods of time, characterised in that they contain, as A), polyester polyols and, as C), 0.01 to 2% by weight of tin salts as catalysts, and optionally, in addition, tertiary amine catalysts.

5. Process for the preparation of one-component systems according to Claims 1 to 4, which are stable under storage for long periods of time, from polyhydroxyl compounds, high-melting diisocyanate diamines and optionally catalysts, characterised in that

A) 1 equivalent of di- or polyfunctional, relatively high molecular weight polyhydroxyl compounds with a molecular weight between 1,000 and 10,000, is mixed with

B) m.(1 to 1.5) + (0.8 to 1.5) NCO equivalents

1) of 4,4'-diphenylmethane-uretdione diisocyanates

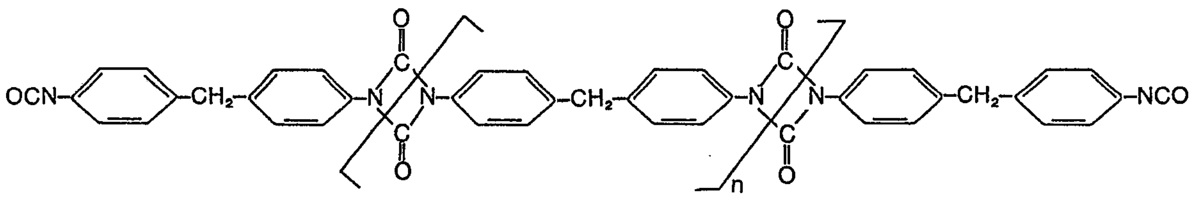

n = 0 to 2.5, or

2) of modified 4,4'-diphenylmethane-uretdione diisocyanates prepared either in situ in dispersion A) or beforehand externally from B)/1 and a di- or polyfunctional, low molecular weight compound containing OH groups bonded to aliphatic and/or cycloaliphatic radicals, and/or aromatically bonded $NH_2$ groups and having a molecular weight between 62 and 400,

wherein m has values of greater than 0 to 7 and, for the modification, m OH and/or $NH_2$ equivalents of these di- or polyfunctional, low molecular weight compounds containing OH groups bonded to aliphatic and/or cycloaliphatic groups, and/or aromatic $NH_2$ groups and having molecular weights of 62 to 400 are reacted with m.(1 to 1.5) + (0.8 to 1.5) NCO equivalents of B)/1, in a finely pulverised form having an average particle size of 1 to 70 µm,

C) 0.001 to 5% by weight, based on A) + B) of a lead and/or tin catalyst, optionally together with other customary polyurethane catalysts, optionally

D) 0 to 25% by weight, based on the total mixture, of a filler-like, finely-divided polyadduct of polyisocyanates and at least one relatively low molecular weight compound having a molecular weight of 32 to 400 and containing two or more reactive groups towards NCO groups, and optionally

E) other auxiliaries and additives of the kind customary in polyurethane chemistry.

6. Process according to Claim 5, characterised in that

A) a relatively high molecular weight polyhydroxyl compound which has a molecular weight of 1,250 to 6,000 and contains 2 to 4 OH groups is used together with

B) m.(1 to 1.5) + (0.8 to 1.5) NCO equivalents

1) of 4,4'-diphenylmethane-uretdione diisocyanates in which

n = 0.1 to 1.5 and m = 0 or

2) of diphenylmethane-uretdione diisocyanates prepared in situ by the dispersion of B)/1 in A) and modified by m equivalents of a diol which is bonded to aliphatic and/or cycloaliphatic radicals and/or of an aromatic diamine with molecular weights of 62 to 400,

(wherein m has values of greater than 0 to 7) and m OH and/or $NH_2$ equivalents are reacted with m.(1 to 1.5) + (0.8 to 1.5) NCO equivalents of 4,4'-diphenylmethane-uretdione diisocyanates B)/1, for the modification,

C) 0.01 to 2% by weight, based on A) + b), of lead and tin catalysts, optionally mixed with other customary polyurethane catalysts, in addition to, optionally,

D) 2.5 to 12.5% by weight of filler-like polyadducts of diisocyanates and diamines, hydrazine, dihydrazide compounds and diols with molecular weights between 32 and 400, in addition to, optionally,

E) customary additives and auxiliaries.

7. Process according to Claims 5 and 6, characterised in that, as B), m.(1 to 1.5) + (0.8 to 1.5) NCO equivalents of diphenylmethane-uretdione diisocyanate B)/2 modified by the external reaction of m equivalents of a low molecular weight diol bonded to aliphatic and/or cycloaliphatic groups and/or of an aromatic diamine having molecular weights of 62 to 400 with m.(1 to 1.5) + (0.8 to 1.5) NCO equivalents of 4,4'-diphenylmethane-uretdione diisocyanates B)/1 in which n = 0.1 to 1.5, wherein m has values greater than 0 to 7, are used.

8. Process according to Claims 5 to 7, characterised in that, as A), 2- to 4-functional polyether polyols are used and, as C), lead salts, optionally together with other customary PU catalysts based on tertiary amines, are used.

9. Process according to Claims 5 to 7, characterised in that, as A), 2- to 4-functional polyester polyols with a melting point above room temperature are used and, as C), tin catalysts are mixed optionally together with other customary PU catalysts based on tertiary amines at temperatures above the melting point of the polyester polyols and the storage-stable one-component systems are granulated after cooling to room temperature.

10. Use of the one-component systems according to Claims 1 to 9, which are stable under storage for long periods of time, for the production of thermosetting polyurethane plastics by heating to temperatures above 100 °C.

**Revendications**

1. Systèmes à un composant stables à une conservation de longue durée, à bas poids moléculaire, essentiellement anhydres, fluides, pâteux ou fondant facilement, hétérogènes, durcissables avec formation de polyuréthannes sous l'action de la chaleur, à base de composé polyhydroxylés, de diisocyanates dimères à haut point de fusion et le cas échéant de catalyseurs, caractérisés en ce qu'ils contiennent:

A) un équivalent de OH de composés polyhydroxylés à haut poids moléculaire di- ou polyvalents, de poids moléculaire 1000 à 10 000.

B) m. (1 à 1,5) + (0,8 à 1,5) équivalents de NCO de

1) des 4,4'-diphénylméthane-uret-dione-diisocyanates

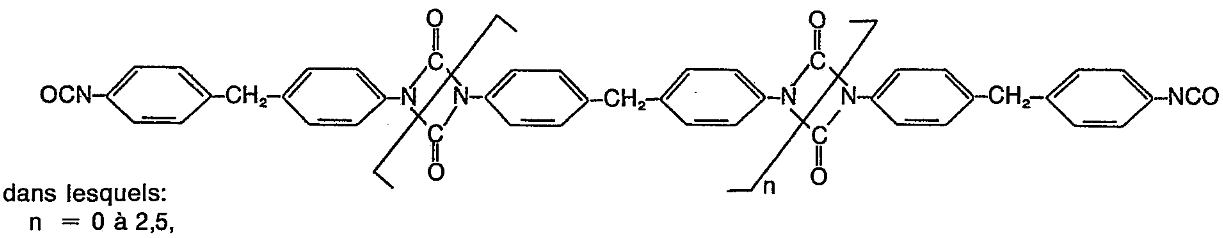

dans lesquels:

n = 0 à 2,5,

m = 0, ou bien

2) des 4,4'-diphénylméthane-uret-dione-diisocyanates modifiés préparés in situ dans la suspension dans A) ou séparément au préalable à partir de B)/1 et de composés à bas poids moléculaire di- ou polyfonctionnels contenant des groupes OH reliés à des groupes aliphatiques et/ou cycloaliphatiques, et/ou des groupes $NH_2$ aromatiques et ayant des poids moléculaires de 62 à 400, m ayant des valeurs de 0 à 7 et la modification ayant été réalisée par réaction de m équivalents d'OH et/ou de $NH_2$ de ces composés à bas poids moléculaires di- ou polyvalents contenant des groupes OH reliés à des groupes aliphatiques et/ou cycloaliphatiques et/ou des groupes $NH_2$ aromatiques et présentant des poids moléculaires de 62 à 400,

avec m.(1 à 1,5) + (0,8 à 1,5) équivalents de NCO de B)/L, à l'état de poudre fine à une dimension de particule moyenne de 1 à 70 µm,

C) 0,0001 à 5% en poids, par rapport à A) + B), d'un catalyseur au plomb et/ou à l'étain, éventuellement avec d'autres catalyseurs usuels pour polyuréthannes, le cas échéant,

D) 0 à 25% en poids (par rapport au mélange total) de polyadducts en fines particules, du type matière de charge, à une dimension de particule moyenne de 1 à 70 microns, obtenus à partir de polyisocyanates et d'au moins un composé à poids moléculaire relativement bas, 32 à 400, contenant deux ou plusieurs groupes réactifs à l'égard des groupes NCO, et le cas échéant,

E) d'autres produits auxiliaires et additifs usuels dans la chimie des polyuréthannes.

2. Systèmes à un composant stables à la conservation de longue durée selon la revendication 1, caractérisés en ce qu'ils contiennent:

A) un équivalent d'OH de polyéthers ou de polyesters à haut poids moléculaires divalents ou polyvalents, de poids moléculaire 1250 à 6000,

B) m.(1 à 1,5) + (0,8 à 1,5) équivalents de NCO de

1) des 4,4'-diphénylméthane-uret-dione-diisocyanates pour lesquels n = 0,1 à 1,5 et m = 0, ou bien

2) des 4,4'-diphénylméthane-uret-dione-diisocyanates modifiés par des diols reliés à des groupes aliphatiques et/ou cycloaliphatiques et/ou des diamines aromatiques de poids moléculaire 62 à 400 pour lesquels n = 0,1 à 1,5, et m a des valeurs supérieures à 0 et pouvant aller jusqu'à 7,

C) 0,01 à 2% en poids de catalyseurs au plomb et à l'étain, éventuellement accompagnés d'autres catalyseurs pour les polyuréthannes,

le cas échéant,

D) 2,5 à 12,5% en poids de polyadducts en fines particules, du type matière de charge, de diisocyanates et de diamines, de l'hydrazine, de dihydrazides et de diols, de poids moléculaires 32 à 400, et

le cas échéant,

E) des produits auxiliaires et additifs usuels.

3. Systèmes à un composant stables à la conservation de longue durée, selon les revendications 1 et 2, caractérisés en ce qu'ils contiennent en tant que composant A) des polyéther-polyols et en tant que composant C) de 0,01 à 2% de sels de plomb servant de catalyseurs, et le cas échéant en outre des catalyseurs du type amine tertiaire.

4. Systèmes à un composant stables à la conservation de longue durée selon les revendications 1 à 2, caractérisés en ce qu'ils contiennent en tant que composant A) des polyesters-polyols et en tant que composant C) de 0,01 à 2% en poids de sels d'étain servant de catalyseurs, et éventuellement en outre des catalyseurs du type amine tertiaire.

5. Procédé de préparation de systèmes à un composant stables à la conservation pendant de longues durées, selon les revendications 1 à 4, à partir de composés polyhydroxylés, de dimères de diisocyanates à haut point de fusion et le cas échéant de catalyseurs, caractérisé en ce que l'on mélange:

A) un équivalent de composés polyhydroxylés à haut poids moléculaires di- ou polyvalents, de poids moléculaire 1000 à 10 000, avec

B) m.(1 à 1,5) + (0,8 à 1,5) équivalents de NCO de

1) des 4,4'-diphénylméthane-uret-dione-diisocyanates

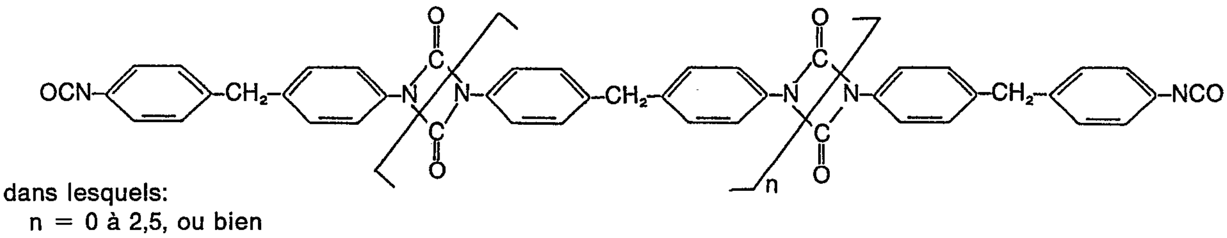

dans lesquels:
n = 0 à 2,5, ou bien

2) des 4,4'-diphénylméthane-uret-dione-diisocyanates modifiés préparés in situ dans la dispersion A) ou séparément au préalable à partir de B)/1 et d'un composé à bas poids moléculaire di- ou polyfonctionnel contenant des groupes OH fixés sur des restes aliphatiques et/ou cycloaliphatiques et/ou des groupes $NH_2$ à liaisons aromatiques et présentant un poids moléculaire de 62 à 400, dans lesquels m a des valeurs supérieures à 0 et allant jusqu'à 7, la modification ayant été réalisée par réaction de m équivalents d'OH et/ou de $NH_2$ de ces composés à bas poids moléculaire di ou polyfonctionnels contenant des groupes OH reliés à des groupes aliphatiques et/ou cycloaliphatiques et/ou des groupes $NH_2$ aromatiques et ayant m.(1 à 1,5) + (0,8 à 1,5) équivalents de NCO de B)/1, à l'état de poudre fine à une dimension de grain moyenne de 1 à 70 µm,

C) 0,001 à 5% en poids, par rapport à A) + B), d'un catalyseur au plomb et/ou à l'étain, éventuellement avec d'autres catalyseurs usuels pour les polyuréthannes, le cas échéant

D) 0 à 25% en poids, par rapport au mélange total, d'un polyadduct en fines particules, du type matière de charge, de polyisocyanates et d'au moins un composé à poids moléculaire relativement bas, 32 à 400, contenant deux ou plusieurs groupes réactifs à l'égard des groupes NCO, et le cas échéant

E) d'autres produits auxiliaires et additifs usuels dans la chimie des polyuréthannes.

6. Procédé selon la revendication 5, caractérisé en ce que l'on utilise:

A) un composé polyhydroxylé à haut poids moléculaire, 1250 à 6000, contenant 2 à 4 groupes OH, avec

B) m.(1 à 1,5) + (0,8 à 1,5) équivalents de NCO de

1) des 4,4'-diphenylméthane-uret-dione-diisocyanates pour lesquels n = 0,1 à 1,5 et m = 0 ou bien

2) des diphénylméthane-uret-dione-diisocyanates modifiés in situ par dispersion de B)/1 dans A), par m équivalents d'un diol relié à des restes aliphatiques et/ou cycloaliphatiques et/ou d'une diamine aromatique de poids moléculaire 62 à 400, (m ayant des valeurs supérieures à 0 et allant jusqu'à 7) et la modification ayant été réalisée par réaction de m équivalents d'OH et/ou de $NH_2$ avec m. (1 à 1,5) + (0,8 à 1,5) équivalents de NCO des 4,4'-diphénylméthane-uret-diisocyanates B)/1,

C) 0,01 à 2% en poids, par rapport à A) + B), de catalyseurs au plomb et à l'étain, éventuellement en mélange avec d'autres catalyseurs usuels pour les polyuréthannes, avec le cas échéant,

D) 2,5 à 12,5% en poids de polyadducts, du type matière de charge, de diisocyanates et de diamines, de l'hydrazine, de dihydrazides et de diols de poids moléculaire 32 à 400, avec le cas échéant,

E) des additifs et produits auxiliaires usuels.

7. Procédé selon les revendications 5 et 6, caractérisé en ce que l'on utilise en tant que composant B) m. (1 à 1,5) + (0,8 à 1,5) équivalents de NCO du diphénylméthane-uret-dione-diisocyanate B)/2 modifié par réaction extérieure de m équivalents d'un diol à bas poids moléculaire relié à des groupes aliphatiques et/ou cycloaliphatiques et/ou d'une diamine aromatique de poids moléculaire 62 à 400 avec m. (1 à 1,5) + (0,8 à 1,5) équivalents de NCO de 4,4'-diphénylméthane-uret-dione-diisocyanates B)/1 pour lesquels n = 0,1 à 1,5, et m a des valeurs supérieures à 0 et pouvant aller jusqu'à 7.

8. Procédé selon les revendications 5 à 7, caractérisé en ce que l'on utilise en tant que composant A) des polyéther-polyols de valence 2 à 4 et en tant que composant C) des sels de plomb éventuellement avec d'autres catalyseurs à base d'amines tertiaires, usuels pour les polyuréthanes.

9. Procédé selon les revendications 5 à 7, caractérisé en ce que l'on utilise en tant que composant A) des polyesterpolyols de valence 2 à 4 fondant au-dessus de la température ambiante et en ce que l'on mélange, en tant que composant C), des catalyseurs à l'étain, éventuellement avec d'autres catalyseurs usuels pour polyuréthannes, à base d'amines tertiaires, à des températures supérieures au point de fusion des polyesterpolyols puis, après refroidissement à température ambiante, on met les systèmes à un composant, stables à la conservation, à l'état de granulés.

10. Utilisation des systèmes à un composant, stables à la conservation pendant de longues durées, selon les revendications 1 à 9, pour la préparation de résines synthétiques de polyuréthannes thermodurcissables par chauffage à des températures supérieures à 100 °C.